# EUROPEAN PATENT APPLICATION

(11) **EP 4 164 299 A1**
(43) Date of publication of application: **12.04.2023**
(21) Application number: 21848930.0
(22) Date of filing: 20.07.2021
(51) Int. Cl.: H04W 52/02, H04W 72/12, H04W 72/04

(54) **COMMUNICATION METHOD AND APPARATUS**

(30) Priority: 28.07.2020 CN 202010737372
(71) Applicant: Huawei Technologies Co., Ltd., Longgang District, Shenzhen, Guangdong 518129 (CN)
(72) Inventor: YU, Haifeng, Shenzhen, Guangdong 518129 (CN); LI, Bingzhao, Shenzhen, Guangdong 518129 (CN)
(74) Representative: MERH-IP Matias Erny Reichl Hoffmann Patentanwälte PartG mbB
(86) International application number: PCT/CN2021/107440
(87) International publication number: WO 2022/022340

(57) **Abstract**

This application relates to the field of communication technologies, and discloses a communication method and apparatus. The method includes: A terminal device receives first indication information, where the first indication information indicates a target monitoring occasion of first control information, and then, the terminal device may monitor the first control information on the target monitoring occasion, where the first control information is used to schedule information about a multicast service. The target monitoring occasion includes at least one of a plurality of monitoring occasions of the first control information. In this manner, an access network device sends the first indication information to the terminal device to indicate the target monitoring occasion, so that the terminal device can perform monitoring on the target monitoring occasion. Compared with a manner in which a terminal device performs monitoring on a plurality of monitoring occasions of first control information, this manner can effectively reduce unnecessary monitoring of the terminal device, and reduce power consumption of the terminal device.

## Description

### CROSS-REFERENCE TO RELATED APPLICATIONS

This application claims priority to Chinese Patent Application No. 202010737372.8, filed with the China National Intellectual Property Administration on July 28, 2020 and entitled "COMMUNICATION METHOD AND APPARATUS", which is incorporated herein by reference in its entirety.

### TECHNICAL FIELD

This application relates to the field of wireless communication technologies, and in particular, to a communication method and apparatus.

### BACKGROUND

In a wireless communication system, an access network device may send configuration information to a terminal device, where the configuration information is used to configure a control-resource set (control-resource set, CORESET) and a search space (search space) associated with the control-resource set. The search space may also be referred to as a search space set (search space set). Then, the access network device sends control information to the terminal device on a monitoring occasion corresponding to the control-resource set and the search space associated with the control-resource set. Correspondingly, after receiving the configuration information, the terminal device may monitor the control information on the monitoring occasion corresponding to the control-resource set and the search space associated with the control-resource set, where the control information may be used to schedule service data, and the service data may be carried on a physical downlink shared channel (physical downlink shared channel, PDSCH). After detecting the control information, the terminal device may receive the service data based on scheduling information included in the control information.

However, after a multicast transmission technology is introduced, the access network device may send information about a multicast service to a plurality of terminal devices in a multicast manner. In this case, how the terminal device monitors the control information to receive the information about the multicast service still needs to be further studied.

### SUMMARY

This application provides a communication method and apparatus, to reduce unnecessary monitoring of a terminal device, and reduce power consumption of the terminal device.

According to a first aspect, an embodiment of this application provides a communication method. The method is applicable to a terminal device or a chip in the terminal device. That the method is applicable to the terminal device is used as an example. In the method, the terminal device receives first indication information, where the first indication information indicates a target monitoring occasion of first control information; and monitors the first control information on the target monitoring occasion, where the first control information is used to schedule information about a multicast service, and the target monitoring occasion includes at least one of a plurality of monitoring occasions of the first control information.

In this manner, an access network device sends the first indication information to the terminal device to indicate the target monitoring occasion, so that the terminal device can perform monitoring on the target monitoring occasion. Compared with a manner in which a terminal device performs monitoring on a plurality of monitoring occasions of first control information, this manner can effectively reduce unnecessary monitoring of the terminal device, and reduce power consumption of the terminal device.

In a possible design, the method further includes: receiving configuration information, where the configuration information is used to configure a first search space of the multicast service and at least one control-resource set of the multicast service, and the at least one control-resource set includes a first control-resource set, where the first search space is associated with the first control-resource set, and the first search space and the first control-resource set correspond to the plurality of monitoring occasions.

In this manner, the access network device can configure the plurality of monitoring occasions of the first control information by configuring one search space, to effectively reduce resource overheads.

In a possible design, the at least one control-resource set further includes a second control-resource set; and the method further includes: receiving second indication information, where the second indication information indicates to switch the second control-resource set associated with the first search space to the first control-resource set.

In this manner, the access network device can flexibly control a control-resource set associated with the first search space, to improve flexibility of regulation and control of the access network device.

In a possible design, the first indication information includes at least one of the following: (1) monitoring periodicity information, where the monitoring periodicity information indicates a periodicity of monitoring the first control information; (2) offset information, where the offset information indicates an offset of the target monitoring occasion in the periodicity; and (3) monitoring duration information, where the monitoring duration information indicates duration for monitoring the first control information in the periodicity.

In a possible design, the monitoring periodicity information includes at least one of the following: a quantity of radio frames included in the periodicity, a quantity of radio subframes included in the periodicity, a quantity of slots included in the periodicity, a quantity of symbols included in the periodicity, and a quantity of monitoring occasions included in the periodicity; the offset information includes at least one of the following: a quantity of radio frames included in the offset, a quantity of radio subframes included in the offset, a quantity of slots included in the offset, a quantity of symbols included in the offset, and a quantity of monitoring occasions included in the offset; and the monitoring duration information includes at least one of the following: a quantity of radio frames included in the duration, a quantity of radio subframes included in the duration, a quantity of slots included in the duration, a quantity of symbols included in the duration, and a quantity of monitoring occasions included in the duration, where the monitoring occasion included in the duration is the target monitoring occasion.

In a possible design, a start moment of the periodicity is determined based on received third indication information; or a start moment of the periodicity is an end moment of receiving the first indication information.

In a possible design, the third indication information includes at least one of the following: an identifier of the radio frame, an identifier of the radio subframe, an identifier of the slot, and an identifier of the symbol.

In a possible design, a start monitoring occasion included in the periodicity is the 1^{st} monitoring occasion that is located after the start moment in the plurality of monitoring occasions; or the start monitoring occasion is a monitoring occasion that is closest to the start moment in the plurality of monitoring occasions.

In a possible design, the method further includes: receiving fourth indication information, where the fourth indication information includes at least one of the following: an identifier of a first TCI state, an identifier of a cell corresponding to the first search space, and an identifier of a BWP corresponding to the first search space, where the identifier of the first TCI state is used to determine a beam for monitoring the first control information.

In a possible design, the method further includes: receiving first configuration information, where the first configuration information is used to configure at least two search spaces of the multicast service and at least one control-resource set of the multicast service, and the at least one control-resource set includes a first control-resource set, where the at least two search spaces are associated with the first control-resource set, and the at least two search spaces and the first control-resource set correspond to the plurality of monitoring occasions.

In this manner, the access network device can configure the plurality of monitoring occasions of the first control information by configuring the at least two search spaces, so that the target monitoring occasion of the first control information can be indicated to the terminal device.

In a possible design, the first indication information includes an identifier of a first search space in the at least two search spaces; and the first search space and the first control-resource set correspond to the target monitoring occasion.

In a possible design, the first indication information includes an identifier of at least one TCI state; and the method further includes: selecting a first TCI state from the at least one TCI state; determining, based on a correspondence between a TCI state and a search space, that the first TCI state corresponds to a first search space; and determining that a monitoring occasion corresponding to the first search space and the first control-resource set is the target monitoring occasion.

In a possible design, the selecting a first TCI state from the at least one TCI state includes: determining a TCI state used to monitor second control information, where the second control information is used to schedule information about a unicast service; and selecting the first TCI state from the at least one TCI state based on the TCI state used to monitor the second control information, where the first TCI state is the same as the TCI state used to monitor the second control information; or determining beam quality corresponding to the at least one TCI state; and selecting the first TCI state from the at least one TCI state based on the beam quality corresponding to the at least one TCI state, where beam quality corresponding to the first TCI state is greater than or equal to beam quality corresponding to another TCI state in the at least one TCI state.

In a possible design, the method further includes: receiving second configuration information, where the second configuration information is used to configure the correspondence between the TCI state and the search space.

In a possible design, the at least one control-resource set further includes a second control-resource set; and the method further includes: receiving second indication information, where the second indication information indicates to switch the second control-resource set associated with the first search space to the first control-resource set.

In a possible design, the method further includes: receiving fourth indication information, where the fourth indication information includes at least one of the following: an identifier of a first TCI state, an identifier of a cell corresponding to the first search space, and an identifier of a BWP corresponding to the first search space, where the identifier of the first TCI state is used to determine a beam for monitoring the first control information.

According to a second aspect, an embodiment of this application provides a communication method. The method is applicable to an access network device or a chip in the access network device. That the method is applicable to the access network device is used as an example. In the method, the access network device determines first indication information, where the first indication information indicates a target monitoring occasion of first control information, and the first control information is used to schedule information about a multicast service; and sends the first indication information to a terminal device, where the target monitoring occasion includes at least one of a plurality of monitoring occasions of the first control information.

In a possible design, the method further includes: sending configuration information to the terminal device, where the configuration information is used to configure a first search space of the multicast service and at least one control-resource set of the multicast service, and the at least one control-resource set includes a first control-resource set, where the first search space is associated with the first control-resource set, and the first search space and the first control-resource set correspond to the plurality of monitoring occasions.

In a possible design, the at least one control-resource set further includes a second control-resource set; and the method further includes: sending second indication information to the terminal device, where the second indication information indicates to switch the second control-resource set associated with the first search space to the first control-resource set.

In a possible design, the first indication information includes at least one of the following: (1) monitoring periodicity information, where the monitoring periodicity information indicates a periodicity of monitoring the first control information; (2) offset information, where the offset information indicates an offset of the target monitoring occasion in the periodicity; and (3) monitoring duration information, where the monitoring duration information indicates duration for monitoring the first control information in the periodicity.

In a possible design, the monitoring periodicity information includes at least one of the following: a quantity of radio frames included in the periodicity, a quantity of radio subframes included in the periodicity, a quantity of slots included in the periodicity, a quantity of symbols included in the periodicity, and a quantity of monitoring occasions included in the periodicity; the offset information includes at least one of the following: a quantity of radio frames included in the offset, a quantity of radio subframes included in the offset, a quantity of slots included in the offset, a quantity of symbols included in the offset, and a quantity of monitoring occasions included in the offset; and the monitoring duration information includes at least one of the following: a quantity of radio frames included in the duration, a quantity of radio subframes included in the duration, a quantity of slots included in the duration, a quantity of symbols included in the duration, and a quantity of monitoring occasions included in the duration, where the monitoring occasion included in the duration is the target monitoring occasion.

In a possible design, the method further includes: sending third indication information to the terminal device, where the third indication information indicates a start moment of the periodicity.

In a possible design, the third indication information includes at least one of the following: an identifier of the radio frame, an identifier of the radio subframe, an identifier of the slot, and an identifier of the symbol.

In a possible design, a start monitoring occasion included in the periodicity is the 1^{st} monitoring occasion that is located after the start moment in the plurality of monitoring occasions; or the start monitoring occasion is a monitoring occasion that is closest to the start moment in the plurality of monitoring occasions.

In a possible design, the method further includes: sending fourth indication information to the terminal device, where the fourth indication information includes at least one of the following: an identifier of a first transmission configuration indicator TCI state, an identifier of a cell corresponding to the first search space, and an identifier of a BWP corresponding to the first search space, where the identifier of the first TCI state is used by the terminal device to determine a beam for monitoring the first control information.

In a possible design, the method further includes: sending first configuration information to the terminal device, where the first configuration information is used to configure at least two search spaces of the multicast service and at least one control-resource set of the multicast service, and the at least one control-resource set includes a first control-resource set, where the at least two search spaces are associated with the first control-resource set, and the at least two search spaces and the first control-resource set correspond to the plurality of monitoring occasions.

In a possible design, the first indication information includes an identifier of a first search space in the at least two search spaces; and the first search space and the first control-resource set correspond to the target monitoring occasion.

In a possible design, the first indication information includes an identifier of at least one TCI state; and the at least one TCI state includes a first TCI state, the first TCI state corresponds to a first search space, and the first search space and the first control-resource set correspond to the target monitoring occasion.

In a possible design, the method further includes: sending second configuration information to the terminal device, where the second configuration information is used to configure the first TCI state to correspond to the first search space.

In a possible design, the at least one control-resource set further includes a second control-resource set; and the method further includes: sending second indication information to the terminal device, where the second indication information indicates to switch the second control-resource set associated with the first search space to the first control-resource set.

In a possible design, the method further includes: sending fourth indication information to the terminal device, where the fourth indication information includes at least one of the following: an identifier of a first TCI state, an identifier of a cell corresponding to the first search space, and an identifier of a BWP corresponding to the first search space, where the identifier of the first TCI state is used to determine a beam for monitoring the first control information.

It should be noted that the method described in the second aspect corresponds to the method described in the first aspect. For beneficial effects of related technical features in the method described in the second aspect, refer to the description in the first aspect. Details are not described again.

According to a third aspect, an embodiment of this application provides a communication apparatus. The communication apparatus may be a terminal device or a chip disposed in the terminal device. The communication apparatus has a function for implementing the first aspect. For example, the communication apparatus includes a corresponding module, unit, or means (means) for performing the steps in the first aspect. The function, unit, or means may be implemented by software or hardware, or may be implemented by hardware executing corresponding software.

In a possible design, the communication apparatus includes a processing unit and a communication unit. The communication unit may also be referred to as a transceiver unit. The communication unit may be configured to receive and send a signal, to implement communication between the communication apparatus and another apparatus. For example, the communication unit is configured to receive configuration information from a terminal device. The processing unit may be configured to perform some internal operations of the communication apparatus.

Based on this design, in an embodiment, the communication unit is configured to receive first indication information, where the first indication information indicates a target monitoring occasion of first control information; and the processing unit is configured to monitor the first control information on the target monitoring occasion, where the first control information is used to schedule information about a multicast service, and the target monitoring occasion includes at least one of a plurality of monitoring occasions of the first control information.

In a possible implementation of this embodiment, the communication unit is further configured to receive configuration information, where the configuration information is used to configure a first search space of the multicast service and at least one control-resource set of the multicast service, and the at least one control-resource set includes a first control-resource set, where the first search space is associated with the first control-resource set, and the first search space and the first control-resource set correspond to the plurality of monitoring occasions.

In a possible implementation of this embodiment, the at least one control-resource set further includes a second control-resource set; and the communication unit is further configured to: receive second indication information, where the second indication information indicates to switch the second control-resource set associated with the first search space to the first control-resource set.

In a possible implementation of this embodiment, the first indication information includes at least one of the following: (1) monitoring periodicity information, where the monitoring periodicity information indicates a periodicity of monitoring the first control information; (2) offset information, where the offset information indicates an offset of the target monitoring occasion in the periodicity; and (3) monitoring duration information, where the monitoring duration information indicates duration for monitoring the first control information in the periodicity.

In a possible implementation of this embodiment, the monitoring periodicity information includes at least one of the following: a quantity of radio frames included in the periodicity, a quantity of radio subframes included in the periodicity, a quantity of slots included in the periodicity, a quantity of symbols included in the periodicity, and a quantity of monitoring occasions included in the periodicity; the offset information includes at least one of the following: a quantity of radio frames included in the offset, a quantity of radio subframes included in the offset, a quantity of slots included in the offset, a quantity of symbols included in the offset, and a quantity of monitoring occasions included in the offset; and the monitoring duration information includes at least one of the following: a quantity of radio frames included in the duration, a quantity of radio subframes included in the duration, a quantity of slots included in the duration, a quantity of symbols included in the duration, and a quantity of monitoring occasions included in the duration, where the monitoring occasion included in the duration is the target monitoring occasion.

In a possible implementation of this embodiment, a start moment of the periodicity is determined based on received third indication information; or a start moment of the periodicity is an end moment of receiving the first indication information.

In a possible implementation of this embodiment, the third indication information includes at least one of the following: an identifier of the radio frame, an identifier of the radio subframe, an identifier of the slot, and an identifier of the symbol.

In a possible implementation of this embodiment, a start monitoring occasion included in the periodicity is the 1^{st} monitoring occasion that is located after the start moment in the plurality of monitoring occasions; or the start monitoring occasion is a monitoring occasion that is closest to the start moment in the plurality of monitoring occasions.

In a possible implementation of this embodiment, the communication unit is further configured to: receive fourth indication information, where the fourth indication information includes at least one of the following: an identifier of a first TCI state, an identifier of a cell corresponding to the first search space, and an identifier of a BWP corresponding to the first search space, where the identifier of the first TCI state is used to determine a beam for monitoring the first control information.

In a possible implementation of this embodiment, the communication unit is further configured to: receive first configuration information, where the first configuration information is used to configure at least two search spaces of the multicast service and at least one control-resource set of the multicast service, and the at least one control-resource set includes a first control-resource set, where the at least two search spaces are associated with the first control-resource set, and the at least two search spaces and the first control-resource set correspond to the plurality of monitoring occasions.

In a possible implementation of this embodiment, the first indication information includes an identifier of a first search space in the at least two search spaces; and the first search space and the first control-resource set correspond to the target monitoring occasion.

In a possible design, the first indication information includes an identifier of at least one TCI state; and the processing unit is further configured to: select a first TCI state from the at least one TCI state; determine, based on a correspondence between a TCI state and a search space, that the first TCI state corresponds to a first search space; and determine that a monitoring occasion corresponding to the first search space and the first control-resource set is the target monitoring occasion.

In a possible design, the processing unit is specifically configured to: determine a TCI state used to monitor second control information, where the second control information is used to schedule information about a unicast service; and select the first TCI state from the at least one TCI state based on the TCI state used to monitor the second control information, where the first TCI state is the same as the TCI state used to monitor the second control information; or determine beam quality corresponding to the at least one TCI state; and select the first TCI state from the at least one TCI state based on the beam quality corresponding to the at least one TCI state, where beam quality corresponding to the first TCI state is greater than or equal to beam quality corresponding to another TCI state in the at least one TCI state.

In another possible design, the communication apparatus includes a processor, and may further include a transceiver. The transceiver is configured to receive and send a signal, and the processor executes program instructions, to complete the method in any one of the possible designs or implementations of the first aspect. The communication apparatus may further include one or more memories. The memory is configured to be coupled to the processor, and the memory may store a necessary computer program or instructions for implementing the function in the first aspect. The processor may execute the computer program or the instructions stored in the memory. When the computer program or the instructions are executed, the communication apparatus is enabled to implement the method according to any one of the possible designs or implementations of the first aspect.

In another possible design, the communication apparatus includes a processor, and the processor may be configured to be coupled to a memory. The memory may store a necessary computer program or instructions for implementing the function in the first aspect. The processor may execute the computer program or the instructions stored in the memory. When the computer program or the instructions are executed, the communication apparatus is enabled to implement the method according to any one of the possible designs or implementations of the first aspect.

In another possible design, the communication apparatus includes a processor and an interface circuit. The processor is configured to: communicate with another apparatus by using the interface circuit, and perform the method according to any one of the possible designs or implementations of the first aspect.

According to a fourth aspect, an embodiment of this application provides a communication apparatus. The communication apparatus may be an access network device or a chip disposed in the access network device. The communication apparatus has a function for implementing the second aspect. For example, the communication apparatus includes a corresponding module, unit, or means for performing the operations in the second aspect. The module, unit, or means may be implemented by software or hardware, or may be implemented by hardware executing corresponding software.

In a possible design, the communication apparatus includes a processing unit and a communication unit. The communication unit may also be referred to as a transceiver unit. The communication unit may be configured to receive and send a signal, to implement communication between the communication apparatus and another apparatus. For example, the communication unit is configured to receive configuration information from a terminal device. The processing unit may be configured to perform some internal operations of the communication apparatus.

Based on this design, in an embodiment, the processing unit is configured to determine first indication information, where the first indication information indicates a target monitoring occasion of first control information, and the first control information is used to schedule information about a multicast service; and the communication unit is configured to send the first indication information to a terminal device, where the target monitoring occasion includes at least one of a plurality of monitoring occasions of the first control information.

In a possible implementation of this embodiment, the communication unit is further configured to send configuration information to the terminal device, where the configuration information is used to configure a first search space of the multicast service and at least one control-resource set of the multicast service, and the at least one control-resource set includes a first control-resource set, where the first search space is associated with the first control-resource set, and the first search space and the first control-resource set correspond to the plurality of monitoring occasions.

In a possible implementation of this embodiment, the at least one control-resource set further includes a second control-resource set; and the communication unit is further configured to: send second indication information to the terminal device, where the second indication information indicates to switch the second control-resource set associated with the first search space to the first control-resource set.

In a possible implementation of this embodiment, the first indication information includes at least one of the following: (1) monitoring periodicity information, where the monitoring periodicity information indicates a periodicity of monitoring the first control information; (2) offset information, where the offset information indicates an offset of the target monitoring occasion in the periodicity; and (3) monitoring duration information, where the monitoring duration information indicates duration for monitoring the first control information in the periodicity.

In a possible implementation of this embodiment, the monitoring periodicity information includes at least one of the following: a quantity of radio frames included in the periodicity, a quantity of radio subframes included in the periodicity, a quantity of slots included in the periodicity, a quantity of symbols included in the periodicity, and a quantity of monitoring occasions included in the periodicity; the offset information includes at least one of the following: a quantity of radio frames included in the offset, a quantity of radio subframes included in the offset, a quantity of slots included in the offset, a quantity of symbols included in the offset, and a quantity of monitoring occasions included in the offset; and the monitoring duration information includes at least one of the following: a quantity of radio frames included in the duration, a quantity of radio subframes included in the duration, a quantity of slots included in the duration, a quantity of symbols included in the duration, and a quantity of monitoring occasions included in the duration, where the monitoring occasion included in the duration is the target monitoring occasion.

In a possible implementation of this embodiment, the communication unit is further configured to: send third indication information to the terminal device, where the third indication information indicates a start moment of the periodicity.

In a possible implementation of this embodiment, the third indication information includes at least one of the following: an identifier of the radio frame, an identifier of the radio subframe, an identifier of the slot, and an identifier of the symbol.

In a possible implementation of this embodiment, a start monitoring occasion included in the periodicity is the 1^{st} monitoring occasion that is located after the start moment in the plurality of monitoring occasions; or the start monitoring occasion is a monitoring occasion that is closest to the start moment in the plurality of monitoring occasions.

In a possible implementation of this embodiment, the communication unit is further configured to: send fourth indication information to the terminal device, where the fourth indication information includes at least one of the following: an identifier of a first transmission configuration indicator TCI state, an identifier of a cell corresponding to the first search space, and an identifier of a BWP corresponding to the first search space, where the identifier of the first TCI state is used by the terminal device to determine a beam for monitoring the first control information.

In a possible implementation of this embodiment, the communication unit is further configured to: send first configuration information to the terminal device, where the first configuration information is used to configure at least two search spaces of the multicast service and at least one control-resource set of the multicast service, and the at least one control-resource set includes a first control-resource set, where the at least two search spaces are associated with the first control-resource set, and the at least two search spaces and the first control-resource set correspond to the plurality of monitoring occasions.

In a possible implementation of this embodiment, the first indication information includes an identifier of a first search space in the at least two search spaces; and the first search space and the first control-resource set correspond to the target monitoring occasion.

In a possible implementation of this embodiment, the first indication information includes an identifier of at least one TCI state; and the at least one TCI state includes a first TCI state, the first TCI state corresponds to a first search space, and the first search space and the first control-resource set correspond to the target monitoring occasion.

In another possible design, the communication apparatus includes a processor, and the processor may be configured to be coupled to a memory. The memory may store a necessary computer program or instructions for implementing the function in the second aspect. The processor may execute the computer program or the instructions stored in the memory. When the computer program or the instructions are executed, the communication apparatus is enabled to implement the method in any one of the possible designs or implementations of the second aspect.

In another possible design, the communication apparatus includes a processor and an interface circuit. The processor is configured to: communicate with another apparatus by using the interface circuit, and perform the method according to any one of the possible designs or implementations of the second aspect.

It may be understood that, in the third aspect or the fourth aspect, the processor may be implemented by using hardware, or may be implemented by using software. When the processor is implemented by using the hardware, the processor may be a logic circuit, an integrated circuit, or the like; or when the processor is implemented by using the software, the processor may be a general-purpose processor, and is implemented by reading software code stored in the memory. In addition, there may be one or more processors, and one or more memories. The memory may be integrated with the processor, or the memory and the processor are disposed separately. In a specific implementation process, the memory and the processor may be integrated into one chip, or may be disposed on different chips. A type of the memory and a manner in which the memory and the processor are disposed are not limited in embodiments of this application. It should be noted that, the communication apparatus in the third aspect or the fourth aspect may include a memory, or may not include a memory.

According to a fifth aspect, an embodiment of this application provides a communication system. The communication system includes the communication apparatus described in the third aspect and the communication apparatus described in the fourth aspect.

According to a sixth aspect, this application provides a computer-readable storage medium. The computer storage medium stores computer-readable instructions; and when a computer reads and executes the computer-readable instructions, the computer is enabled to perform the method in any one of the possible designs of the first aspect or the second aspect.

According to a seventh aspect, this application provides a computer program product. When a computer reads and executes the computer program product, the computer is enabled to perform the method in any one of the possible designs of the first aspect or the second aspect.

According to an eighth aspect, this application provides a chip. The chip includes a processor, and the processor is coupled to a memory, and is configured to read and execute a software program stored in the memory, to implement the method in any one of the possible designs of the first aspect or the second aspect. Optionally, the chip further includes the memory.

These aspects or other aspects of this application are more readily apparent from the following description of embodiments.

### BRIEF DESCRIPTION OF DRAWINGS

FIG. 1 is a schematic diagram of a network architecture to which an embodiment of this application is applicable;
FIG. 2a is a schematic diagram of a CU-DU split architecture according to an embodiment of this application;
FIG. 2b is a schematic diagram of another CU-DU split architecture according to an embodiment of this application;
FIG. 3 shows an example of a parameter of a search space according to an embodiment of this application;
FIG. 4 shows an example of a plurality of monitoring occasions of control information configured by an access network device and in which the access network device sends the control information by using different beams at different time;
FIG. 5 is a schematic flowchart corresponding to a communication method according to Embodiment 1 of this application;
FIG. 6a shows an example of switching a control-resource set associated with a first search space according to an embodiment of this application;
FIG. 6b shows an example of groups according to an embodiment of this application;
FIG. 7 shows examples of start time and end time at which a terminal device performs monitoring on a target monitoring occasion according to an embodiment of this application;
FIG. 8 shows some examples of a target monitoring occasion according to an embodiment of this application;
FIG. 9 shows examples of a plurality of MAC CE formats sent by an access network device to a terminal device according to an embodiment of this application;
FIG. 10 is a schematic flowchart corresponding to a communication method according to Embodiment 2 of this application;
FIG. 11 shows examples of a plurality of MAC CE formats sent by an access network device to a terminal device according to an embodiment of this application;
FIG. 12 shows several examples for activating TCI according to an embodiment of this application;
FIG. 13 shows several examples for activating TCI according to an embodiment of this application;
FIG. 14 is a block diagram of a possible example of an apparatus according to an embodiment of this application;
FIG. 15 is a schematic diagram of a structure of a terminal device according to an embodiment of this application; and
FIG. 16 is a schematic diagram of a structure of an access network device according to an embodiment of this application.

### DESCRIPTION OF EMBODIMENTS

The following clearly and completely describes the technical solutions in embodiments of this application with reference to the accompanying drawings in embodiments of this application.

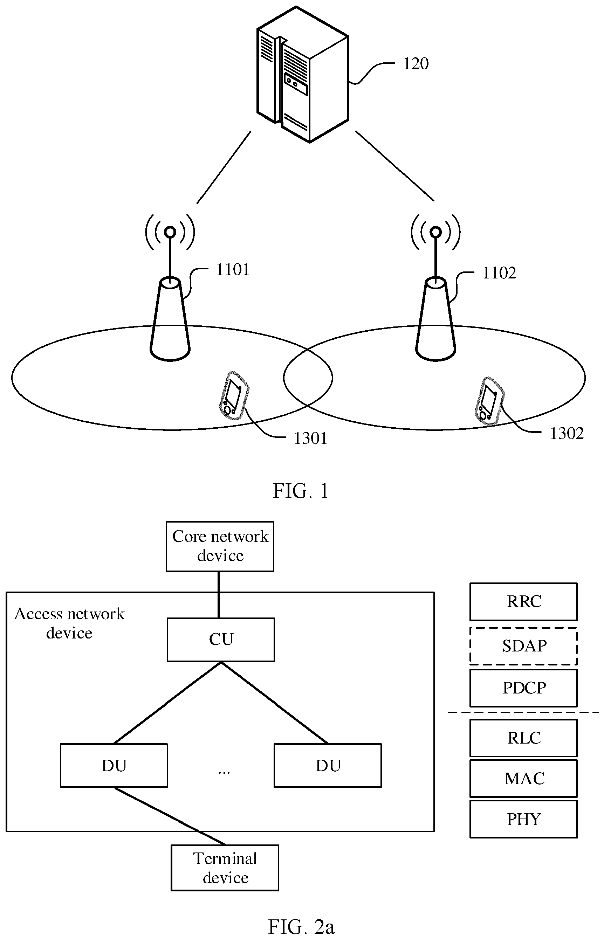

FIG. 1 is a schematic diagram of a network architecture to which an embodiment of this application is applicable. As shown in FIG. 1, a terminal device (for example, a terminal device 1301 or a terminal device 1302) may access a radio network, to obtain a service of an external network (for example, a data network (data network, DN)) via the radio network, or communicate with another device via the radio network, for example, may communicate with another terminal device. The radio network includes a radio access network (radio access network, RAN) and a core network (core network, CN). The RAN may also be referred to as an access network (access network, AN), and is configured to connect the terminal device to the radio network. The CN is configured to manage the terminal device and provide a gateway for communicating with the DN.

The RAN may include one or more access network devices, for example, an access network device 1101 and an access network device 1102. The CN may include one or more core network elements, for example, a core network element 120.

The following separately describes the terminal device, the access network device, and the core network element in detail.

### 1. Terminal device

The terminal device may also be referred to as user equipment (user equipment, UE), and includes a device that provides a user with voice and/or data connectivity, for example, may include a handheld device with a wireless connection function, or a processing device connected to a wireless modem. The terminal device may communicate with a core network via a radio access network (radio access network, RAN), and exchange a voice and/or data with the RAN. The terminal device may include a wireless terminal device, a mobile terminal device, a device-to-device (device-to-device, D2D) communication terminal device, a vehicle-to-everything (vehicle-to-everything, V2X) terminal device, a machine-to-machine/machine-type communication (machine-to-machine/machine-type communication, M2M/MTC) terminal device, an internet of things (internet of things, IoT) terminal device, a subscriber unit, a subscriber station, a mobile station, a remote station, an access point (access point, AP), a remote terminal, an access terminal, a user terminal, a user agent, user equipment, or the like. For example, the terminal device may include a mobile phone (or referred to as a "cellular" phone), a computer with a mobile terminal device, or a portable, pocket-sized, handheld, or computer built-in mobile apparatus. For example, the terminal device may be a device such as a personal communications service (personal communications service, PCS) phone, a cordless phone, a session initiation protocol (session initiation protocol, SIP) phone, a wireless local loop (wireless local loop, WLL) station, or a personal digital assistant (personal digital assistant, PDA). The terminal device further includes a limited device, for example, a device having low power consumption, a device having a limited storage capability, or a device having a limited computing capability. For example, the terminal device includes an information sensing device, for example, a barcode, radio frequency identification (radio frequency identification, RFID), a sensor, a global positioning system (global positioning system, GPS), or a laser scanner.

In embodiments of this application, an apparatus configured to implement a function of the terminal device may be a terminal device, or may be an apparatus that can support the terminal device in implementing the function, for example, a chip system, or a combined component or device that can implement the function of the terminal device. The apparatus may be installed in the terminal device. In embodiments of this application, the chip system may include a chip, or may include a chip and another discrete component. In the technical solutions provided in embodiments of this application, the technical solutions provided in embodiments of this application are described by using an example in which the apparatus configured to implement the function of the terminal is the terminal device.

### 2. Access network device

The access network device is a node or a device that connects a terminal device to a radio network, and the access network device may also be referred to as a base station. The access network device includes, for example, but is not limited to, a next-generation NodeB (generation NodeB, gNB) in a 5G communication system, an evolved NodeB (evolved NodeB, eNB), a radio network controller (radio network controller, RNC), a NodeB (NodeB, NB), a base station controller (base station controller, BSC), a base transceiver station (base transceiver station, BTS), a home evolved NodeB ((home evolved NodeB, HeNB) or (home NodeB, HNB)), a baseband unit (baseband unit, BBU), a transmission reception point (transmission reception point, TRP), a transmission point (transmission point, TP), or a mobile switching center.

In embodiments of this application, an apparatus configured to implement a function of the access network device may be an access network device, or may be an apparatus that can support the access network device in implementing the function, for example, a chip system, or a combined component or device that can implement the function of the access network device. The apparatus may be installed in the access network device. In the technical solutions provided in embodiments of this application, the technical solutions provided in embodiments of this application are described by using an example in which the apparatus configured to implement the function of the access network device is the access network device.

An interface between the access network device and the terminal device may be a Uu interface (or referred to as an air interface). Certainly, in future communication, names of these interfaces may remain unchanged, or may be replaced with other names. This is not limited in this application. For example, communication between the access network device and the terminal device is performed in accordance with a specific protocol layer structure. For example, a control plane protocol layer structure may include a radio resource control (radio resource control, RRC) layer, a packet data convergence protocol (packet data convergence protocol, PDCP) layer, a radio link control (radio link control, RLC) layer, a media access control (media access control, MAC) layer, and a physical layer. A user plane protocol layer structure may include a PDCP layer, an RLC layer, a MAC layer, and a physical layer. In possible implementation, a service data adaptation protocol (service data adaptation protocol, SDAP) layer may be further included above the PDCP layer

The access network device may implement functions of the protocol layers such as the RRC layer, the PDCP layer, the RLC layer, and the MAC layer through one node or a plurality of nodes. For example, in an evolved structure, the access network device may include one or more centralized units (centralized units, CUs) and one or more distributed units (distributed units, DUs), and a plurality of DUs may be centrally controlled by one CU. For example, an interface between the CU and the DU may be referred to as an F 1 interface. A control plane (control plane, CP) interface may be an F1-C interface, and a user plane (user plane, UP) interface may be an F 1-U interface. Division may be performed for the CU and the DU based on protocol layers of a radio network. For example, as shown in FIG. 2a, functions of the PDCP layer and a protocol layer above the PDCP layer are set on the CU, and functions of protocol layers (for example, the RLC layer and the MAC layer) below the PDCP layer are set on the DU.

It may be understood that, division of processing functions of the CU and the DU based on the protocol layers is merely an example, and the processing functions may alternatively be divided in another manner. For example, functions of the protocol layers above the RLC layer are set on the CU, and functions of the RLC layer and the protocol layers below the RLC layer are set on the DU. For another example, the CU or the DU may be further divided into functions having more protocol layers. For another example, the CU or the DU may be further divided into some processing functions having protocol layers. In a design, some functions of the RLC layer and functions of the protocol layers above the RLC layer are set on the CU, and remaining functions of the RLC layer and functions of the protocol layers below the RLC layer are set on the DU. In another design, division of functions of the CU or the DU may alternatively be performed based on service types or other system requirements. For example, division may be performed based on latencies. Functions whose processing time needs to satisfy a latency requirement are set on the DU, and functions whose processing time does not need to satisfy the latency requirement are set on the CU. In another design, the CU may alternatively have one or more functions of the core network. For example, the CU may be set on a network side for ease of centralized management; and the DU may have a plurality of radio frequency functions, or the radio frequency functions may be set remotely. This is not limited in embodiments of this application.

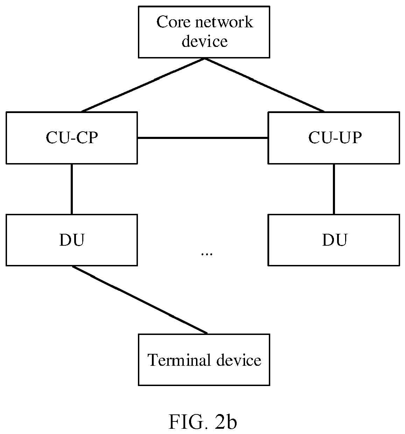

For example, the functions of the CU may be implemented by one entity or different entities. For example, as shown in FIG. 2b, the functions of the CU may be further divided, to be specific, a control plane and a user plane are split, and are implemented by using different entities: a control plane CU entity (namely, a CU-CP entity) and a user plane CU entity (namely, a CU-UP entity). The CU-CP entity and the CU-UP entity may be coupled to the DU, to jointly complete the function of the access network device. An interface between the CU-CP entity and the CU-UP entity may be an E1 interface, an interface between the CU-CP entity and the DU may be an F1-C interface, and an interface between the CU-UP entity and the DU may be an F 1-U interface. One DU and one CU-UP may be connected to one CU-CP. Under control of a same CU-CP, one DU may be connected to a plurality of CU-UPs, and one CU-UP may be connected to a plurality of DUs.

It should be noted that, in the architectures shown in FIG. 2a and FIG. 2b, signaling generated by the CU may be sent to the terminal device via the DU, or signaling generated by the terminal device may be sent to the CU via the DU. The DU may transparently transmit the signaling to the terminal device or the CU by directly encapsulating the signaling at a protocol layer without parsing the signaling. In the following embodiments, if transmission of such signaling between the DU and the terminal device is involved, sending or receiving of the signaling by the DU includes this scenario. For example, signaling at the RRC layer or the PDCP layer is finally processed as data at a physical layer and sent to the terminal device, or is converted from received data at a physical layer. In this architecture, it may also be considered that the signaling at the RRC layer or the PDCP layer is sent by the DU, or sent by the DU and the radio frequency apparatus.

### 3. Core network element

A 5G communication system is used as an example. Core network elements in a CN may include an access and mobility management function (access and mobility management function, AMF) network element, a session management function (session management function, SMF) network element, a user plane function (user plane function, UPF) network element, a policy control function (policy control function, PCF) network element, and the like. This is not specifically limited.

The network architecture shown in FIG. 1 is applicable to communication systems of various radio access technologies (radio access technologies, RATs), for example, a 4G (or referred to as long term evolution (long term evolution, LTE)) communication system, a 5G (or referred to as new radio (new radio, NR)) communication system, or a transition system between the LTE communication system and the 5G communication system. The transition system may also be referred to as a 4.5G communication system. Alternatively, the communication system may alternatively be a future communication system. The network architecture and the service scenario described in embodiments of this application are intended to describe the technical solutions in embodiments of this application more clearly, and do not constitute a limitation on the technical solutions provided in embodiments of this application. A person of ordinary skill in the art may know that, with evolution of the communication network architecture and emergence of new service scenarios, the technical solutions provided in embodiments of this application are also applicable to similar technical problems. An apparatus in the following embodiments of this application may be located in the terminal device or the access network device based on a function implemented by the apparatus. When the foregoing CU-DU structure is used, the access network device may be a CU, a DU, or an access network device including the CU and the DU.

The following first explains and describes related technical features in embodiments of this application. It should be noted that these explanations are intended to make this application easier to be understood, and should not be considered as a limitation on the protection scope claimed by this application.

### 1. Beam

That the network architecture shown in FIG. 1 is applicable to a 5G communication system is used as an example. Compared with LTE, the 5G communication system uses a higher carrier frequency (generally, greater than 6 GHz), for example, a 28 GHz, 38 GHz, or 72 GHz frequency band, to implement wireless communication with a larger bandwidth and a higher transmission rate. Because a carrier frequency is high, a radio signal transmitted by using the carrier frequency undergoes severer fading in a spatial propagation process, and even it is difficult to detect the radio signal at a receive end. Therefore, in the 5G communication system, a beamforming (beamforming, BF) technology is used to obtain a beam with good directivity, to increase an antenna gain and increase power in a transmit direction. For example, on a carrier frequency lower than 6 GHz, a beam manner may also be used to improve a spectrum spatial multiplexing rate.

The beam may be understood as a communication resource, and the beam may be a wide beam, a narrow beam, or a beam of another type. Different beams may be considered as different communication resources, and same information or different information may be sent through different beams. Beams include a transmit beam and a receive beam. The transmit beam may refer to distribution of signal strength formed in different directions in space after a signal is transmitted by using an antenna, and the receive beam may refer to distribution that an antenna array enhances or weakens reception of a radio signal in different directions in space. In embodiments of this application, for example, an access network device sends information through a transmit beam x1, and correspondingly, a terminal device may receive the information through a receive beam x2. In this case, the transmit beam x1 and the receive beam x2 may be understood as a beam pair. It should be noted that, the transmit beam and the receive beam may alternatively not be clearly distinguished in embodiments of this application. The transmit beam x1 and the receive beam x2 may be collectively referred to as a beam x. In this way, it may be understood that, the access network device sends the information through the beam x, and correspondingly, the terminal device may receive the information through the beam x.

### 2. Transmission configuration indicator state

In downlink data transmission, when sending data to a terminal device through a specific beam, an access network device needs to notify the terminal device of information about a transmit beam used by the access network device. In this way, the terminal device can receive, through a receive beam corresponding to the transmit beam, the data sent by the access network device.

For example, the access network device may indicate, to the terminal device by using a transmission configuration indicator (transmission configuration indicator, TCI) field, related information of the transmit beam used by the access network device. The TCI field includes a plurality of bits, for example, includes three bits. In this case, the TCI field may represent eight different values. Each value of the TCI field corresponds to an index (or referred to as an identifier) of one TCI state (state). The index may identify one TCI state. The TCI state includes a plurality of parameters, and the related information of the transmit beam may be determined by using these parameters.

### 3. Search space and control-resource set

One search space may be associated with one control-resource set. A search space and a control-resource set associated with the search space may correspond to a plurality of monitoring occasions of control information.

### (1) Control-resource set

The control-resource set determines a frequency domain resource of a monitoring occasion, in other words, control information may be transmitted on the frequency domain resource corresponding to the control-resource set. The frequency domain resource corresponding to the control-resource set may include a plurality of resource blocks (resource blocks, RBs).

The control-resource set may be configured with one or more TCI states. The control information corresponding to the control-resource set may be transmitted by using one TCI state in one or more TCI states configured for the control-resource set. A TCI state to be specifically used may be activated by using signaling sent by an access network device. In other words, although the access network device configures a plurality of TCI states for one control-resource set, the TCI states are not activated (are invalid), and are valid only after being activated by using signaling.

### (2) Search space

The search space determines a time domain resource for transmitting a monitoring occasion, and the search space may be configured with some time domain information, for example, a periodicity (where for ease of differentiation, the periodicity herein is referred to as a first periodicity, the first periodicity is a time interval for monitoring the search space, and a unit may be a slot), a slot offset (namely, a slot offset from the start of the first periodicity to time for actually monitoring the search space, where the slot offset is less than a value of the first periodicity for monitoring), first duration (where the first duration is configured by using a duration parameter, namely, time for continuously monitoring the search space, and may include a plurality of slots, and a quantity of included slots is less than the value of the first periodicity for monitoring), and a time domain start location (namely, a time domain start location corresponding to a control-resource set associated with the search space in each slot), where each time domain start location may be understood as a time domain start location of one monitoring occasion.

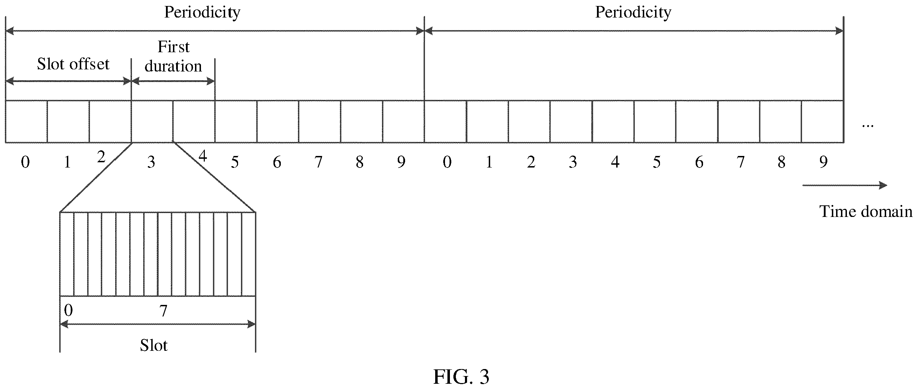

For ease of understanding, specific examples are used to describe meanings of parameters of the control-resource set and the search space. As shown in FIG. 3, the first periodicity is 10 slots, the slot offset is three slots, the first duration is two slots, the time domain start location is a symbol 0 and a symbol 7 in one slot, and second duration (where the second duration is configured by using the duration parameter of the control-resource set, that is, indicated by a quantity of symbols included in the monitoring occasion) of the control-resource set is two symbols. In this example, there are four monitoring occasions in total in the first periodicity for monitoring of every 10 slots. A symbol 0 and a symbol 1 in a slot 3 may be understood as one monitoring occasion, a symbol 7 and a symbol 8 in the slot 3 may be understood as one monitoring occasion, a symbol 0 and a symbol 1 in a slot 4 may be understood as one monitoring occasion, and a symbol 7 and a symbol 8 in the slot 4 may be understood as one monitoring occasion.

### 4. Multicast transmission technology

The multicast transmission technology is a transmission technology in which a sender sends data and a plurality of receivers receive the data. For example, an access network device sends data and a plurality of terminal devices receive the data. A possible multicast transmission technology is a single-cell point-to-multipoint (single-cell point-to-multipoint, SC-PTM) technology. In the SC-PTM technology, a physical downlink shared channel (physical downlink shared channel, PDSCH) may be used to transmit data of a multicast service. Different from a PDSCH carrying a unicast service, the PDSCH carrying the multicast service may be referred to as a multicast PDSCH. The access network device may pre-configure an association relationship between the multicast service and a group radio network temporary identifier (group radio network temporary identifier, G-RNTI), where each multicast service may be associated with one G-RNTI.

During unicast transmission, the access network device may send, to the terminal device, control information (for example, downlink control information (downlink control information, DCI)) carried on a physical downlink control channel (physical downlink control channel, PDCCH). The DCI is used to schedule a unicast PDSCH carrying a service (where the service may be a unicast service or a multicast service). The DCI may be scrambled by using a cell radio network temporary identifier (cell radio network temporary identifier, C-RNTI). Correspondingly, after detecting the DCI based on the C-RNTI, the terminal device may receive the unicast PDSCH based on scheduling information included in the DCI.

Similarly, during multicast transmission, the access network device may send DCI to a plurality of terminal devices interested in a multicast service, where the DCI is used to schedule information about the multicast service, and the information about the multicast service may be carried in a multicast PDSCH. The DCI may be scrambled by using a G-RNTI associated with the multicast service. Correspondingly, after detecting the DCI based on the G-RNTI associated with the multicast service, the plurality of terminal devices may receive the information about the multicast service based on scheduling information included in the DCI.

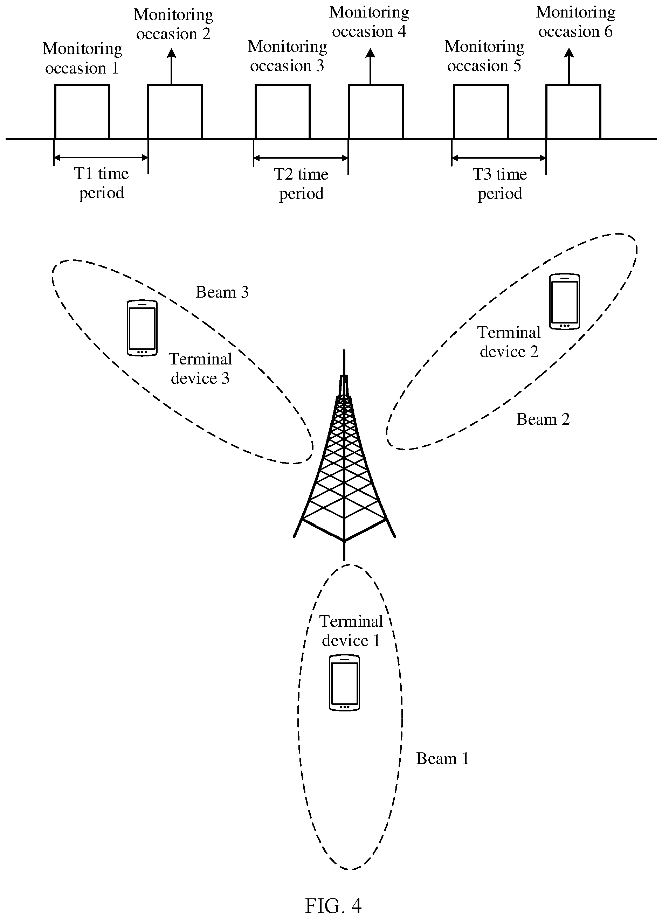

Based on the foregoing related technical features, in the network architecture shown in FIG. 1, it is assumed that a coverage area of the access network device includes a plurality of terminal devices, and each of a terminal device 1, a terminal device 2, and a terminal device 3 is interested in a multicast service. In this case, the access network device may configure a plurality of monitoring occasions of control information for the terminal device 1, the terminal device 2, and the terminal device 3, where the control information is used to schedule information about the multicast service. Then, each of the terminal device 1, the terminal device 2, and the terminal device 3 monitors the control information on the plurality of monitoring occasions. FIG. 4 shows a plurality of monitoring occasions (for example, a monitoring occasion 1 to a monitoring occasion 6) of control information configured by an access network device.

However, after a beam technology is introduced, the access network device may send the control information through different beams at different time, to complete broadcast beam coverage of a cell. For example, still with reference to FIG. 4, the access network device may send the control information through a beam 1 on a monitoring occasion in a T1 time period, send the control information through a beam 2 on a monitoring occasion in a T2 time period, and send the control information through a beam 3 on a monitoring occasion in a T3 time period. As shown in FIG. 4, a terminal device 1 is located within a coverage area of the beam 1, a terminal device 2 is located within a coverage area of the beam 2, and a terminal device 3 is located within a coverage area of the beam 3. In this case, the terminal device 3 is used as an example. Because the access network device does not send the control information through the beam 3 in the T 1 time period and the T2 time period, the terminal device 3 does not detect the control information on the monitoring occasions in the T 1 time period and the T2 time period, and instead, may detect the control information on the monitoring occasion in the T3 time period. In other words, monitoring performed by the terminal device 3 on the monitoring occasions in the T 1 time period and the T2 time period is unnecessary. Similarly, monitoring performed by the terminal device 1 on the monitoring occasions in the T2 time period and the T3 time period is unnecessary, and monitoring performed by the terminal device 2 on the monitoring occasions in the T1 time period and the T3 time period is unnecessary. It can be learned that, in the multicast transmission technology, when the access network device sends the control information through different beams at different time, unnecessary monitoring of the terminal device is caused, and power consumption of the terminal device is high.

Based on this, embodiments of this application provide a communication method, to reduce unnecessary monitoring of a terminal device, and reduce power consumption of the terminal device.

For example, the method provided in embodiments of this application may include: The terminal device receives first indication information, where the first indication information indicates a target monitoring occasion of first control information, and then, the terminal device may monitor the first control information on the target monitoring occasion, where the first control information is used to schedule information about a multicast service. The target monitoring occasion includes at least one of a plurality of monitoring occasions of the first control information; the target monitoring occasion includes some of a plurality of monitoring occasions of the first control information; the target monitoring occasion includes N monitoring occasions in M monitoring occasions of the first control information, where N is less than M, and both M and N are positive integers; or the target monitoring occasion includes some monitoring occasions in a monitoring occasion set of the first control information. In this manner, an access network device sends the first indication information to the terminal device to indicate the target monitoring occasion, so that the terminal device can perform monitoring on the target monitoring occasion. Compared with a manner in which a terminal device performs monitoring on a plurality of monitoring occasions of first control information, this manner can effectively reduce unnecessary monitoring of the terminal device, and reduce power consumption of the terminal device.

The following describes in detail the communication method provided in embodiments of this application with reference to Embodiment 1 and Embodiment 2.

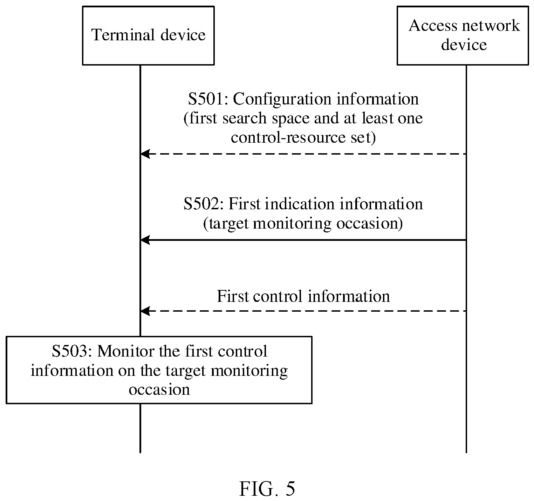

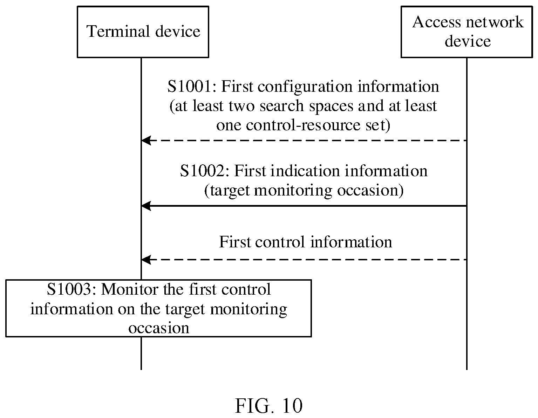

In the following description process, that the method is applied to the system architecture shown in FIG. 1 is used as an example. In addition, the method may be performed by two communication apparatuses. The two communication apparatuses are, for example, a first communication apparatus and a second communication apparatus. The first communication apparatus may be an access network device or a communication apparatus that can support the access network device in implementing functions required in the method. Certainly, the first communication apparatus may alternatively be another communication apparatus, for example, a chip or a chip system. The second communication apparatus may be a terminal device or a communication apparatus that can support the terminal device in implementing functions required in the method. Certainly, the second communication apparatus may alternatively be another communication apparatus, for example, a chip or a chip system. For ease of description, the following uses an example in which the method is performed by the access network device and the terminal device, to be specific, an example in which the first communication apparatus is an access network device and the second communication apparatus is a terminal device. If the embodiments are applied to the system architecture shown in FIG. 1, the following access network device that is configured to perform the embodiment shown in FIG. 5 or FIG. 10 may be the access network device 1101 shown in FIG. 1, and the following terminal device that is configured to perform the embodiment shown in FIG. 5 or FIG. 10 may be the terminal device 1301 shown in FIG. 1.

It should be noted that a coverage area of the access network device may include a plurality of terminal devices interested in a multicast service (for example, a first multicast service). In Embodiment 1 and Embodiment 2, communication between the access network device and one of the terminal devices interested in the first multicast service is used as an example for description.

### Embodiment 1

FIG. 5 is a schematic flowchart corresponding to a communication method according to Embodiment 1 of this application. As shown in FIG. 5, the method includes the following steps.

S501: An access network device sends configuration information, where the configuration information is used to configure a first search space of a first multicast service and at least one control-resource set of the first multicast service. Correspondingly, a terminal device may receive the configuration information.
1. The configuration information is described below.

In an example, the configuration information may be used to configure the first search space of the first multicast service and a first control-resource set of the first multicast service, and may be further used to configure the first search space to be associated with the first control-resource set. For example, the configuration information may include a first search space configuration (SearchSpace config), and the first search space configuration may include a controlResourceSetId parameter. When the controlResourceSetId parameter includes an identifier of the first control-resource set, it indicates that the first search space is associated with the first control-resource set. Then, the terminal device may determine, based on the configuration information, that the first search space and the first control-resource set correspond to a plurality of monitoring occasions of first control information. The first control information may be, for example, DCI, and is used to schedule information about the first multicast service. The information about the first multicast service may include uplink information and/or downlink information of the first multicast service. The information may include data, control signaling, and/or the like. This is not specifically limited.

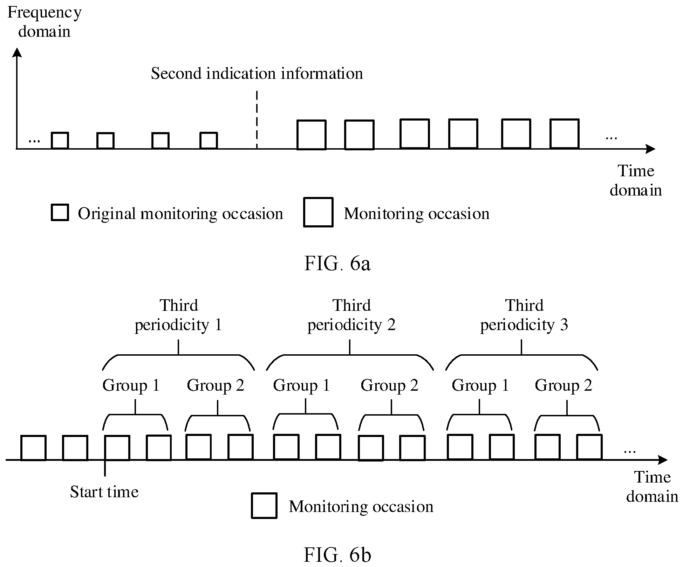

In another example, the configuration information may be used to configure the first search space of the first multicast service and at least two control-resource sets of the first multicast service, and may be further used to configure the first search space to be associated with one control-resource set (for example, a second control-resource set) in the at least two control-resource sets. Then, the terminal device may determine, based on the configuration information, that the first search space and the second control-resource set correspond to a plurality of monitoring occasions of first control information (where for ease of differentiation, the monitoring occasion herein may be referred to as an original monitoring occasion), as shown in FIG. 6a. In this case, the access network device may further subsequently send second indication information to the terminal device, where the second indication information indicates to switch the second control-resource set associated with the first search space to another control-resource set (for example, a first control-resource set) in the at least two control-resource sets, where switching may also be described as updating. Then, after receiving the second indication information, the terminal device may determine, based on the second indication information, that the first search space and the first control-resource set correspond to the plurality of monitoring occasions of the first control information. Herein, that the second indication information indicates to switch the second control-resource set associated with the first search space to the first control-resource set may also be understood as that the second indication information indicates the first search space to be associated with the first control-resource set. In this case, after the terminal device receives the second indication information, it may be considered that the access network device reconfigures, by using the second indication information, the first search space to be associated with the first control-resource set, and the association that is between the first search space and the second control-resource set and that is configured in the previous configuration information is invalid. For example, the second indication information may include an identifier of the first control-resource set. In this manner, the access network device can flexibly control a control-resource set associated with the first search space, to improve flexibility of regulation and control of the access network device.

For example, the access network device may send the second indication information to the terminal device in a plurality of manners. For example, the access network device may send the second indication information to the terminal device by using a MAC control element (control element, CE) or DCI.

It should be noted that, when the control-resource set associated with the first search space needs to be switched again, the access network device may further send the second indication information to the terminal device, and this is not shown in FIG. 6a currently. A quantity of times of switching the control-resource set associated with the first search space is not limited in this embodiment of this application.

2. A manner in which the access network device sends the configuration information to the terminal device is described below.

For example, the access network device may send the configuration information to the terminal device in a plurality of manners. For example, the access network device may send, to the terminal device by using an RRC message or a system message, multicast configuration information corresponding to the first multicast service, where the multicast configuration information may include the foregoing configuration information, and further, the multicast configuration information may include a G-RNTI associated with the first multicast service and/or bandwidth part (bandwidth part, BWP) information corresponding to the G-RNTI. The BWP information may include an identifier of a BWP. For example, the BWP is a BWP 1. In this case, each frequency domain resource corresponding to a control-resource set configured by using the configuration information is within a range of the BWP 1.

It should be noted that S501 may be an optional step. For example, the plurality of monitoring occasions of the first control information may be predefined. In this case, S501 may no longer be performed.

S502: The access network device sends first indication information to the terminal device, where the first indication information indicates a target monitoring occasion of the first control information. Correspondingly, the terminal device may receive the first indication information.

S503: The terminal device monitors the first control information on the target monitoring occasion.
1. The first indication information is described below.

For example, the first indication information may indicate the target monitoring occasion of the first control information in a plurality of manners. The following describes two possible implementations, which are respectively an implementation 1 and an implementation 2.

### Implementation 1

In the implementation 1, the first indication information may include at least one of the following: monitoring periodicity information, offset information, and monitoring duration information. For example, the first indication information may include the monitoring periodicity information and the offset information. In this case, the monitoring duration information may be predefined in a protocol. For another example, the first indication information may include the offset information and the monitoring duration information. In this case, the monitoring periodicity information may be predefined in a protocol.
(1) The monitoring periodicity information may indicate a second periodicity, and the second periodicity may be a periodicity of monitoring the first control information by the terminal device. For example, the second periodicity may include at least one of the following: one or more radio frames, one or more radio subframes, one or more slots, one or more symbols, and one or more monitoring occasions.

Specifically, the second periodicity (which may be any second periodicity) may include one or more radio frames. In this case, the monitoring periodicity information may include a quantity of radio frames included in the second periodicity. Alternatively, the second periodicity may include one or more radio subframes. In this case, the monitoring periodicity information may include a quantity of radio subframes included in the second periodicity. Alternatively, the second periodicity may include one or more slots. In this case, the monitoring periodicity information may include a quantity of slots included in the second periodicity. Alternatively, the second periodicity may include one or more symbols. In this case, the monitoring periodicity information may include a quantity of symbols included in the second periodicity. Alternatively, the second periodicity may include one or more monitoring occasions. In this case, the monitoring periodicity information may include a quantity of monitoring occasions included in the second periodicity.

In this embodiment of this application, the second periodicity may be equal to duration in which the access network device performs one time of beam scanning. For example, if the access network device may use eight beams (for example, a beam 1 to a beam 8) in total, that the access network device uses the beam 1 to the beam 8 in turn may be referred to as one time of beam scanning.

(2) The offset information may indicate an offset of the target monitoring occasion in the offset. For example, the offset may include at least one of the following: one or more radio frames, one or more radio subframes, one or more slots, one or more symbols, and one or more monitoring occasions.

Specifically, the offset may include one or more radio frames. In this case, the offset information may include a quantity of radio frames included in the offset. Alternatively, the offset may include one or more radio subframes. In this case, the offset information may include a quantity of radio subframes included in the offset. Alternatively, the offset may include one or more slots. In this case, the offset information may include a quantity of slots included in the offset. Alternatively, the offset may include one or more symbols. In this case, the offset information may include a quantity of symbols included in the offset. Alternatively, the offset may include one or more monitoring occasions. In this case, the offset information may include a quantity of monitoring occasions included in the offset.

(3) The monitoring duration information may indicate monitoring duration, and the monitoring duration may be duration in which the terminal device monitors the first control information in the second periodicity. For example, the monitoring duration may include at least one of the following: one or more radio frames, one or more radio subframes, one or more slots, one or more symbols, and one or more monitoring occasions.

Specifically, the monitoring duration may include one or more radio frames. In this case, the monitoring duration information may include a quantity of radio frames included in the duration. Alternatively, the monitoring duration may include one or more radio subframes. In this case, the monitoring duration information may include a quantity of radio subframes included in the duration. Alternatively, the monitoring duration may include one or more slots. In this case, the monitoring duration information may include a quantity of slots included in the duration. Alternatively, the monitoring duration may include one or more symbols. In this case, the monitoring duration information may include a quantity of symbols included in the duration. Alternatively, the monitoring duration may include one or more monitoring occasions. In this case, the monitoring duration information may include a quantity of monitoring occasions included in the duration. It may be understood that the monitoring occasion included in the duration is the target monitoring occasion.

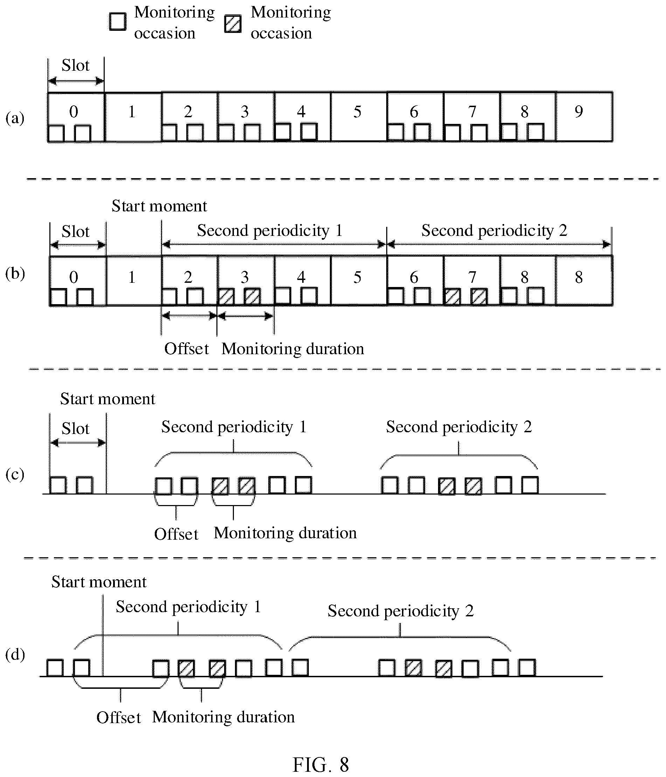

Based on the foregoing descriptions, for example, when the monitoring periodicity information includes the quantity of monitoring occasions included in the second periodicity, and the offset information may include the quantity of monitoring occasions included in the offset, in each second periodicity, a monitoring occasion satisfying a formula: "an identifier of the monitoring occasion mod the monitoring periodicity information = the offset information, where mod represents a modulo operation" is the 1^{st} target monitoring occasion in the second periodicity. Further, another target monitoring occasion in the second periodicity may be determined based on the monitoring duration information. Herein, the identifier of the monitoring occasion may be a number of the monitoring occasion, and the number may be pre-negotiated by the access network device and the terminal device. This is not specifically limited. For detailed content that the first indication information indicates the target monitoring occasion, refer to some examples described in FIG. 8 below.

### Implementation 2

In the implementation 2, the plurality of monitoring occasions of the first control information may belong to at least two groups, a quantity of monitoring occasions included in each group may be the same, and the at least two groups may be periodically repeated based on a third periodicity. As shown in FIG. 6b, it is assumed that the plurality of monitoring occasions of the first control information are grouped into a group 1 and a group 2, each group includes two monitoring occasions, and each monitoring occasion belongs only to one group. In this case, the third periodicity may include four monitoring occasions. It should be noted that the quantity of monitoring occasions included in each group described in this embodiment of this application may be a quantity of monitoring occasions included in each group in one third periodicity.

For example, the first indication information indicates a first group in the at least two groups, and each monitoring occasion included in the first group is the target monitoring occasion.

In an example, the first indication information may include index information of the first group. For example, if a quantity of groups of the plurality of monitoring occasions of the first control information is 4 (where the four groups are respectively a group 1, a group 2, a group 3, and a group 4), index information of each group may include two bits. For example, when a value of the two bits is 00, it represents the group 1; when a value of the two bits is 01, it represents the group 2; when a value of the two bits is 10, it represents the group 3; or when a value of the two bits is 11, it represents the group 4. In this case, if the index information of the first group included in the first indication information is 00, the first group is the group 1, and each monitoring occasion included in the group 1 in each third periodicity is the target monitoring occasion.

In another example, for example, if a quantity of groups of the plurality of monitoring occasions of the first control information is 4 (where the four groups are respectively a group 1, a group 2, a group 3, and a group 4), the first indication information may include four bits, which respectively indicate whether the four groups include the target monitoring occasion, and the four bits are in one-to-one correspondence with the four groups (for example, the 1^{st} bit corresponds to the group 1, the 2^{nd} bit corresponds to the group 2, the 3^{rd} bit corresponds to the group 3, and the 4^{th} bit corresponds to the group 4). For a bit, if a value of the bit is 0, it indicates that a monitoring occasion included in a group corresponding to the bit is not the target monitoring occasion (in other words, the terminal device does not need to perform monitoring on the monitoring occasion included in the group); or if a value of the bit is 1, it indicates that each monitoring occasion included in a group corresponding to the bit is the target monitoring occasion. In this case, if a value of the four bits included in the first indication information is 1000, it indicates that the first group indicated by the first indication information is the group 1, and each monitoring occasion included in the group 1 in each third periodicity is the target monitoring occasion.

In another example, the first indication information may include offset information of the first group. For example, if a quantity of groups to which the plurality of monitoring occasions of the first control information belong is 4, the offset information of the first group may include two bits. For example, when a value of the two bits is 00, it indicates that an offset of the first group is 0 (where in this case, the first group is the 1^{st} group in the four bits); when a value of the two bits is 01, it indicates that an offset of the first group is 1 (where in this case, the first group is the 2^{nd} group in the four bits); when a value of the two bits is 10, it indicates that an offset of the first group is 2 (where in this case, the first group is the 3^{rd} group in the four bits); or when a value of the two bits is 11, it indicates that an offset of the first group is 3 (where in this case, the first group is the 4^{th} group in the four bits).

Alternatively, if a quantity of groups to which the plurality of monitoring occasions of the first control information belong is N, an offset indicated by the offset information of the first group may be any one of 0, 1, ..., and N-1, and the monitoring occasion included in the first group satisfies a formula: an identifier of the monitoring occasion mod the quantity of groups = the offset of the first group. For example, if the quantity of groups to which the plurality of monitoring occasions of the first control information belong is 4, the offset of the first group may be 0, 1, 2, or 3. For example, if the offset of the first group is 0, it indicates that the monitoring occasion included in the first group satisfies a formula: the identifier of the monitoring occasion mod the quantity of groups = 0. In this case, each group may include one monitoring occasion, an identifier of the monitoring occasion may be a number of the monitoring occasion, and the number may be pre-negotiated by the access network device and the terminal device. This is not specifically limited.

For the foregoing three examples, optionally, the access network device may send, to the terminal device by using the MAC CE or the DCI, at least one of the following: the quantity of groups to which the plurality of monitoring occasions of the first control information belong, the quantity of monitoring occasions included in each group, and the quantity of monitoring occasions included in the third periodicity. In this manner, the access network device can flexibly adjust information such as the quantity of groups, so that regulation and control of the access network device is more beneficial. Alternatively, the information may be predefined in a protocol, or may be preconfigured by the access network device. This is not specifically limited.

It should be noted that, in the foregoing implementation 1, the access network device may indicate the target monitoring occasion from a plurality of possible perspectives (for example, the radio frame, the subframe, the slot, the symbol, and the monitoring occasion), and implementation is flexible. In the foregoing implementation 2, the access network device may indicate the target monitoring occasion in a simple manner (for example, indicate the target monitoring occasion by indicating a group), so that transmission resources can be saved. The implementation 1 is used as an example for description below in this embodiment of this application. The implementation 2 may be processed with reference to the implementation 1.

For example, the access network device may send the first indication information to the terminal device in a plurality of manners. For example, the access network device may send the first indication information to the terminal device by using the RRC message, the MAC CE, or the DCI. When the first indication information includes the monitoring periodicity information, the offset information, and the monitoring duration information, the access network device may send the monitoring periodicity information, the offset information, and the monitoring duration information by using a same message. For example, the access network device sends the monitoring periodicity information, the offset information, and the monitoring duration information to the terminal device by using the MAC CE. Alternatively, the access network device may send the monitoring periodicity information, the offset information, and the monitoring duration information by using different messages. For example, the access network device sends the monitoring periodicity information by using the RRC message, and sends the offset information and the monitoring duration information to the terminal device by using the MAC CE or the DCI.

2. Start time at which the terminal device performs monitoring on the target monitoring occasion is described below.

As described above, in the implementation 1, the terminal device may perform monitoring on the target monitoring occasion in each of a plurality of second periodicities. In addition, the terminal device may further determine a start moment of the second periodicity, and the start moment of the second periodicity may be understood as a start moment of the 1^{st} second periodicity (for example, a second periodicity 1) in the plurality of second periodicities, or the start moment of the second periodicity is used by the terminal device to determine the start time for performing monitoring on the target monitoring occasion. Before the start time, the terminal device performs monitoring on each monitoring occasion of the first control information. After the start time, the terminal device performs monitoring on the target monitoring occasion of the first control information, and does not perform monitoring on a non-target monitoring occasion. In addition, a start moment of another second periodicity that is after the 1^{st} second periodicity may be obtained based on the start moment of the 1^{st} second periodicity. For example, a start moment of a second periodicity 2 is a start moment of a first periodicity 1 plus duration of the second periodicity.

For example, the access network device may indicate the start moment of the second periodicity to the terminal device. There may be a plurality of specific indication manners.

In an example, the access network device may send third indication information to the terminal device. Correspondingly, the terminal device may receive the third indication information, where the third indication information indicates the start moment of the second periodicity, and then, the terminal device may determine the start moment of the second periodicity based on the third indication information. The indication manner may be understood as an explicit indication manner. For example, the third indication information may include at least one of the following: an identifier of the radio frame, an identifier of the radio subframe, an identifier of the slot, and an identifier of the symbol. Specifically, when the third indication information includes the identifier of the radio frame, the start moment of the second periodicity may be a boundary of the radio frame; when the third indication information includes the identifier of the radio subframe, the start moment of the second periodicity may be a boundary of the radio subframe; when the third indication information includes the identifier of the slot, the start moment of the second periodicity may be a boundary of the slot; or when the third indication information includes the identifier of the symbol, the start moment of the second periodicity may be a boundary of the symbol. When the third indication information includes the identifier of the radio frame and the identifier of the radio subframe, the start moment of the second periodicity may be a boundary of the radio subframe in the radio frame. Other cases may be processed with reference to this case.

The boundary may be a start boundary or an end boundary. A radio frame is used as an example. A start boundary of the radio frame may be a start location of the radio frame or an end location of a previous radio frame of the radio frame, and an end boundary of the radio frame may be an end location of the radio frame or a start location of a next radio frame of the radio frame. The identifier of the radio frame is a system frame number (system frame number, SFN). For example, if the identifier of the radio frame included in the third indication information is an SFN #3, the start moment of the second periodicity may be a boundary of the SFN #3, for example, may be a start boundary of the SFN #3 (that is, a start location of the SFN #3 or an end location of an SFN #2), or an end boundary of the SFN #3 (that is, an end location of the SFN #3 or a start location of an SFN #4). For another example, if the identifier of the radio frame included in the third indication information is an SFN #3, and the identifier of the radio subframe is 2, the start moment of the second periodicity may be a boundary of the 2^{nd} radio subframe in the SFN #3, for example, may be a start boundary of the 2^{nd} radio subframe in the SFN #3 (that is, an end location of the 1^{st} radio subframe in the SFN #3 or a start location of the 2^{nd} radio subframe in the SFN #3), or an end boundary of the 2^{nd} radio subframe in the SFN #3 (that is, an end location of the 2^{nd} radio subframe in the SFN #3 or a start location of the 3^{rd} radio subframe in the SFN #3).

The access network device may send the third indication information to the terminal device in a plurality of manners. For example, the access network device may send the third indication information to the terminal device by using the RRC message, the MAC CE, or the DCI.

In another example, the access network device may send the first indication information to the terminal device to implicitly indicate the start moment of the second periodicity. For example, the terminal device may receive the first indication information, and determine that an end moment of receiving the first indication information is the start moment of the second periodicity. The end moment of receiving the first indication information may be an end boundary of a time unit in which the first indication information is located. For example, the time unit in which the first indication information is located may be a radio frame, a radio subframe, a slot, or a symbol. This is not specifically limited. For example, the end moment of receiving the first indication information may be an end boundary of a slot in which the first indication information is located.

In another example, the access network device may indicate, to the terminal device, that the start moment of the second periodicity is the same as a start moment of the first search space.

It should be noted that, in another possible example, the start moment of the second periodicity may also be predefined in a protocol.

In addition, after determining the start moment of the second periodicity, the terminal device may directly determine the 1^{st} second periodicity based on the start moment of the second periodicity and the duration of the second periodicity. In this case, the start moment of the second periodicity may be understood as an absolute start moment (where in this case, the start time may be the start moment of the second periodicity). Alternatively, after determining the start moment of the second periodicity, the terminal device may first determine a start monitoring occasion of the 1^{st} second periodicity based on the start moment of the second periodicity (where in this case, the start time may be a start boundary of the start monitoring occasion), and then determine the 1^{st} second periodicity based on the start monitoring occasion and the quantity of monitoring occasions included in the second periodicity. In this case, the terminal device may determine the start monitoring occasion of the 1^{st} second periodicity based on the start moment of the second periodicity in a plurality of manners. For example, the terminal device may determine that the 1^{st} monitoring occasion (where the monitoring occasion is the monitoring occasion of the first control information) that is after the start moment of the second periodicity is the start monitoring occasion. For another example, the terminal device may determine that a monitoring occasion (where the monitoring occasion is the monitoring occasion of the first control information) that is closest to the start moment of the second periodicity is the start monitoring occasion. The monitoring occasion that is closest to the start moment of the second periodicity may be located before the start moment of the second periodicity, or may be located after the start moment of the second periodicity.

It may be understood that, in another possible example, the access network device may alternatively indicate the start monitoring occasion to the terminal device (and no longer indicate the start moment of the second periodicity). For example, the access network device sends an identifier of the start monitoring occasion to the terminal device, and then, the terminal device may determine the start monitoring occasion. In this case, the start time may be a start boundary of the start monitoring occasion.

In addition, for the foregoing implementation 2, the terminal device may determine start time for performing monitoring on the target monitoring occasion. For example, the terminal device may determine the start monitoring occasion (where the start time may be a start boundary of the start monitoring occasion). For a manner in which the terminal device determines the start monitoring occasion, refer to the foregoing descriptions. Details are not described again.

3. End time at which the terminal device performs monitoring on the target monitoring occasion is described below.

As described above, the terminal device may determine the start time for performing monitoring on the target monitoring occasion. For example, the terminal device may further determine the end time for performing monitoring on the target monitoring occasion. After the start time and before the end time, the terminal device may perform monitoring on the target monitoring occasion, and no longer perform monitoring on a non-target monitoring occasion. After the end time, the terminal device may perform monitoring on each monitoring occasion of the first control information (that is, restore to a state that exists before the start time).

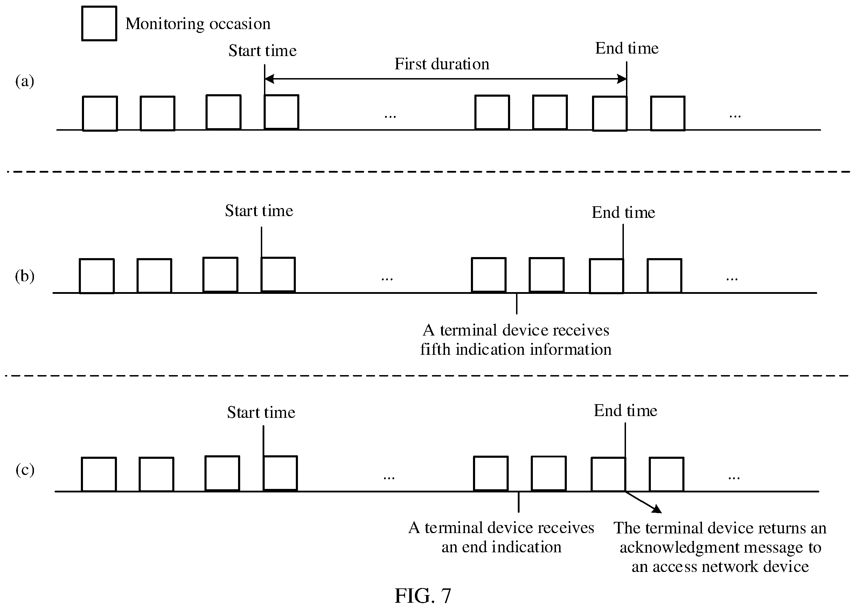

There may be a plurality of manners in which the terminal device determines the end time for performing monitoring on the target monitoring occasion. In an example, as shown in (a) in FIG. 7, the access network device may send first duration information to the terminal device, where the first duration information indicates first duration, and then the terminal device may determine the end time based on the start time and the first duration. The first duration may include at least one of the following: one or more radio frames, one or more radio subframes, one or more slots, one or more symbols, and one or more monitoring occasions.

The access network device may send the first duration information to the terminal device in a plurality of manners. For example, the access network device may send the first duration information to the terminal device by using the RRC message, the MAC CE, or the DCI. For example, the access network device may send the third indication information and the first duration information to the terminal device by using a same message, or may send the third indication information and the first duration information to the terminal device by using different messages.

In another example, as shown in (b) in FIG. 7, the access network device may indicate the end time to the terminal device. For example, the access network device may send indication information (referred to as fifth indication information for ease of differentiation) to the terminal device, where the fifth indication information indicates the end time. For example, the fifth indication information may include at least one of the following: an identifier of the radio frame, an identifier of the radio subframe, an identifier of the slot, and an identifier of the symbol. Specifically, when the fifth indication information includes the identifier of the radio frame, the end time may be a start boundary or an end boundary of the radio frame; when the fifth indication information includes the identifier of the radio subframe, the end time may be a start boundary or an end boundary of the radio subframe; when the fifth indication information includes the identifier of the slot, the end time may be a start boundary or an end boundary of the slot; or when the fifth indication information includes the identifier of the symbol, the end time may be a start boundary or an end boundary of the symbol.

The access network device may send the fifth indication information to the terminal device in a plurality of manners. For example, the access network device may send the fifth indication information to the terminal device by using the RRC message, the MAC CE, or the DCI. For example, the access network device may send the third indication information and the fifth indication information to the terminal device by using a same message, or may send the third indication information and the fifth indication information to the terminal device by using different messages.

In another example, as shown in (c) in FIG. 7, the access network device may send an end indication to the terminal device, and after receiving the end indication, the terminal device may return an acknowledgment message to the access network device. When returning the acknowledgment message to the access network device, the terminal device may stop a mechanism of performing monitoring on the target monitoring occasion. In other words, time at which the terminal device returns the acknowledgment message to the access network device is the end time for performing monitoring on the target monitoring occasion. For example, the access network device may send the end indication to the terminal device in a plurality of manners, for example, send the end indication to the terminal device by using the DCI or the MAC CE. In this manner, the access network device can flexibly send the end indication to the terminal device. In addition, because when returning the acknowledgment message, the terminal device may stop the mechanism of performing monitoring on the target monitoring occasion, a problem that the terminal device and the access network device have different understandings of stopping the foregoing mechanism can be effectively avoided.

4. Some examples of the target monitoring occasion are described below.

Based on the foregoing descriptions about the first indication information and the start moment of the second periodicity, after receiving the first indication information, the terminal device may determine the target monitoring occasion in each of the plurality of second periodicities (for example, the second periodicity 1, the second periodicity 2, and a second periodicity 3) based on the first indication information, the offset, and the monitoring duration.

The following provides detail descriptions with reference to some specific examples. It should be noted that in the examples, the terminal device may determine the plurality of monitoring occasions of the first control information based on the configuration information (and optionally, the second indication information), as shown in (a) in FIG. 8.

Example 1: As shown in (b) in FIG. 8, it is assumed that the start moment of the second periodicity (namely, the start moment of the second periodicity 1) is an end moment of a slot 1, the second periodicity includes four slots, the offset is one slot, and the monitoring duration includes one slot. In this case, the second periodicity 1 is used as an example, and the terminal device may determine that the 1^{st} monitoring occasion that is after a slot 2 is the 1^{st} target monitoring occasion in the second periodicity 1, and then may determine another target monitoring occasion in the second periodicity 1 based on the monitoring duration. In this way, the terminal device can determine that both monitoring occasions in a slot 3 and a slot 7 (where there is another slot subsequently, which is not shown currently) are target monitoring occasions.

Example 2: It is assumed that the start moment of the second periodicity (namely, the start moment of the second periodicity 1) is an end moment of a slot 0, the second periodicity includes six monitoring occasions, the offset is two monitoring occasions, and the monitoring duration is two monitoring occasions. In this case, the terminal device may determine a start monitoring occasion of the second periodicity 1 based on the start moment of the second periodicity 1. For example, the start monitoring occasion of the second periodicity 1 may be the 1^{st} monitoring occasion that is located after the start moment of the second periodicity 1 in the plurality of monitoring occasions. In this case, as shown in (c) in FIG. 8, the terminal device may determine that the 3^{rd} monitoring occasion and the 4^{th} monitoring occasion in each second periodicity are target monitoring occasions. For another example, the start monitoring occasion of the second periodicity 1 may be a monitoring occasion that is closest to the start moment of the second periodicity 1 in the plurality of monitoring occasions. In this case, as shown in (d) in FIG. 8, the terminal device may determine that the 3^{rd} monitoring occasion and the 4^{th} monitoring occasion in each second periodicity are target monitoring occasions.

5. That the access network device sends fourth indication information to the terminal device is described below.

For example, in addition to sending the first indication information to the terminal device, the access network device may further send the fourth indication information to the terminal device. The fourth indication information may include at least one of the following: an identifier of a cell corresponding to the first search space, an identifier of the first control-resource set, and an identifier of a first TCI state. Optionally, the fourth indication information may further include at least one of the following: an identifier of the first search space and an identifier of a BWP corresponding to the first search space.

When the fourth indication information is carried in a MAC CE, the identifier of the cell corresponding to the first search space (that is, an identifier of a serving cell) indicates a cell to which the MAC CE is applicable. The identifier of the first control-resource set indicates to switch the control-resource set associated with the first search space to the first control-resource set. The identifier of the first TCI state indicates that a TCI state applicable to the first control-resource set is the first TCI state, or a TCI state activated for the first control-resource set is the first TCI state. The first TCI state may be used by the terminal device to determine a beam for monitoring the first control information. To be specific, the terminal device may monitor the first control information by using a corresponding beam based on the identifier of the first TCI state. It may be understood that, in another possible example, the access network device may alternatively send identifiers of at least two TCI states to the terminal device, and the terminal device selects the first TCI state from the at least two TCI states, and then determines, based on the first TCI state, the beam for monitoring the first control information. For a specific implementation, refer to the descriptions in Embodiment 2.

In an example, the terminal device has one serving cell, and the access network device configures, in the serving cell for the terminal device, the plurality of monitoring occasions (determined based on the first search space and the first control-resource set associated with the first search space) of the first control information, and a plurality of monitoring occasions (determined by another search space and a control-resource set associated with the another search space) of other control information. In this case, the access network device may send the identifier of the first search space and/or the identifier of the first control-resource set to the terminal device, so that the terminal device can learn that the first indication information indicates the target monitoring occasion of the first control information corresponding to the first search space and the first control information, instead of a target monitoring occasion of the other control information. It may be understood that, if the access network device sends the second indication information to the terminal device in S501, the terminal device may alternatively determine, based on the second indication information, that the first indication information indicates the target monitoring occasion of the first control information. In this case, the fourth indication information sent by the access network device may no longer include the identifier of the first control-resource set.

Alternatively, if the plurality of monitoring occasions of the first control information and the plurality of monitoring occasions of the other control information that are configured by the access network device for the terminal device are separately located on different BWPs of the serving cell, for example, the plurality of monitoring occasions of the first control information are located in a BWP 1 (namely, a BWP corresponding to the first search space), and the plurality of monitoring occasions of the other control information are located in another BWP, the access network device may send an identifier of the BWP 1 to the terminal device, so that the terminal device can learn that the first indication information indicates the target monitoring occasion of the first control information, instead of a target monitoring occasion of the other control information.

In another example, the terminal device may have a plurality of serving cells, and the access network device configures, in a serving cell 1 for the terminal device, the plurality of monitoring occasions (determined based on the first search space and the first control-resource set associated with the first search space) of the first control information, and configures, in another serving cell for the terminal device, a plurality of monitoring occasions (determined by another search space and a control-resource set associated with the another search space) of other control information. In this case, the access network device may further send an identifier of the serving cell 1 (namely, the cell corresponding to the first search space) to the terminal device, so that the terminal device can learn that the first indication information indicates the target monitoring occasion of the first control information, instead of a target monitoring occasion of the other control information.

6. A manner in which the access network device sends the first indication information, the second indication information, the third indication information, and the fourth indication information to the terminal device is described below.

As described above, the access network device may send the first indication information to the terminal device, and optionally, may further send other possible information, for example, the second indication information, the third indication information, and the fourth indication information. It can be learned from the foregoing descriptions about the first indication information, the second indication information, the third indication information, and the fourth indication information that, the access network device may send, to the terminal device, at least one of the following: (1) the monitoring periodicity information, (2) the offset information, (3) the monitoring duration information, (4) information about the start moment of the second periodicity, (5) the identifier of the first control-resource set, (6) the identifier of the first TCI state, (7) the identifier of the serving cell, (8) the identifier of the first search space, and (9) the identifier of the BWP corresponding to the first search space.

For example, the access network device may send at least one of (1) to (9) to the terminal device by using a same message, or may send at least one of (1) to (9) to the terminal device by using different messages.

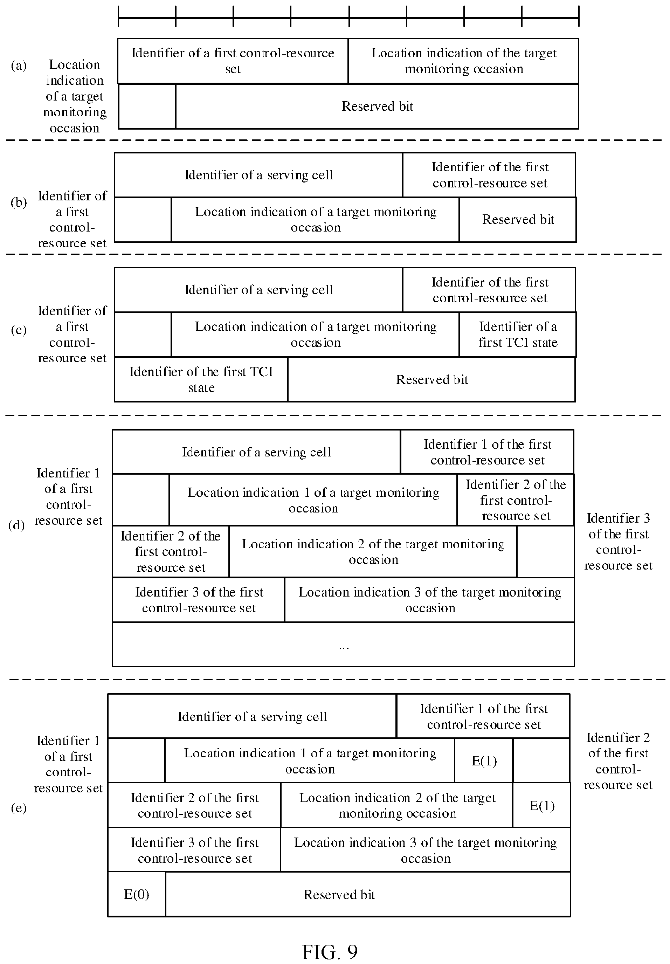

Example 1: The access network device may send (1), (2), (3), and (5) to the terminal device by using a first MAC CE, where (1), (2), and (3) may be collectively referred to as a location indication of the target monitoring occasion. (a) in FIG. 9 shows an example of a format of the first MAC CE. In addition, the first MAC CE may further include a reserved (reserved) field, and a value of the reserved bit may be 0.

Example 2: The access network device may send (1), (2), (3), (5), and (7) to the terminal device by using a second MAC CE. (b) in FIG. 9 shows an example of a format of the second MAC CE.

Example 3: The access network device may send (1), (2), (3), (5), (6), and (7) to the terminal device by using a third MAC CE. (c) in FIG. 9 shows an example of a format of the third MAC CE. It should be noted that, in this embodiment of this application, an example in which an identifier of a TCI state includes seven bits is used for description.

Example 4: When the terminal device is interested in a plurality of multicast services, the access network device may indicate target monitoring occasions of control information of the plurality of multicast services to the terminal device by using a same MAC CE (for example, a fourth MAC CE). (d) in FIG. 9 shows an example of a format of the fourth MAC CE. In the fourth MAC CE, an identifier 1 of the first control-resource set and a location indication 1 of the target monitoring occasion may correspond to a first multicast service, an identifier 2 of the first control-resource set and a location indication 2 of the target monitoring occasion may correspond to a second multicast service, an identifier 3 of the first control-resource set and a location indication 3 of the target monitoring occasion may correspond to a third multicast service, and so on.
(e) in FIG. 9 shows another example of the format of the fourth MAC CE. A difference between (e) in FIG. 9 and (d) in FIG. 9 lies in that: in (e) in FIG. 9, an extension indication field may be added to the fourth MAC CE, where the extension field indicates whether the fourth MAC CE still includes the identifier of the first control-resource set and the location indication of the target monitoring occasion that correspond to the multicast service; or the extension field indicates whether the identifier of the first control-resource set and the location indication of the target monitoring occasion that exist before the extension field is added are the identifier of the first control-resource set and the location indication of the target monitoring occasion of the last multicast service. For example, the extension field may be represented by an E field. The field may include one bit. When a value of the bit is 1, it indicates that the fourth MAC CE still includes an identifier of a first control-resource set and a location indication of a target monitoring occasion that correspond to at least one multicast service; or when a value of the bit is 0, it indicates that the fourth MAC CE does not include an identifier of a first control-resource set or a location indication of a target monitoring occasion that corresponds to another multicast service. In addition, the fourth MAC CE may further include a reserved field, and a value of the reserved bit may be 0.

It should be noted that FIG. 9 is merely several possible examples. A quantity of bits occupied by each piece of information is not limited in this embodiment of this application.

According to the foregoing method, the access network device may configure one search space and at least one control-resource set for the terminal device, where the search space and the control-resource set associated with the search space correspond to the plurality of monitoring occasions of the first control information. Then, the access network device may divide the plurality of monitoring occasions into different groups, to indicate the terminal device to perform monitoring on one of the groups (where the monitoring occasion included in the group is the target monitoring occasion), so that unnecessary monitoring of the terminal device can be effectively reduced, and power consumption of the terminal device can be reduced.

### Embodiment 2

FIG. 10 is a schematic flowchart corresponding to a communication method according to Embodiment 2 of this application. As shown in FIG. 10, the method includes the following steps.

S1001: An access network device sends first configuration information, where the first configuration information is used to configure at least two search spaces of a first multicast service and at least one control-resource set of the first multicast service. Correspondingly, a terminal device may receive the configuration information.

In an example, the first configuration information may be used to configure the at least two search spaces of the first multicast service and a first control-resource set of the first multicast service, and may be further used to configure the at least two search spaces to be associated with the first control-resource set. Then, the terminal device may determine, based on the configuration information, that the at least two search spaces and the first control-resource set correspond to a plurality of monitoring occasions of first control information.

In another example, the first configuration information may be used to configure the at least two search spaces of the first multicast service and at least two control-resource sets of the first multicast service, and may be further used to configure a first search space to be associated with one control-resource set (for example, a second control-resource set) in the at least two control-resource sets. Then, the terminal device may determine, based on the configuration information, that the at least two search spaces and the second control-resource set correspond to a plurality of monitoring occasions of first control information (where for ease of differentiation, the monitoring occasion herein may be referred to as an original monitoring occasion). In this case, the access network device may further subsequently send second indication information to the terminal device, where the second indication information indicates to switch the second control-resource set associated with the at least two search spaces to another control-resource set (for example, a first control-resource set) in the at least two control-resource sets, where switching may also be described as updating. Then, after receiving the second indication information, the terminal device may determine, based on the second indication information, that the at least two search spaces and the first control-resource set correspond to the plurality of monitoring occasions of the first control information. Herein, that the second indication information indicates to switch the second control-resource set associated with the at least two search spaces to the first control-resource set may also be understood as that the second indication information indicates the at least two search spaces to be associated with the first control-resource set. In this case, after the terminal device receives the second indication information, it may be considered that the access network device reconfigures, by using the second indication information, the at least two search spaces to be associated with the first control-resource set, and the association that is between the at least two search spaces and the second control-resource set and that is configured in the previous configuration information is invalid. For example, the second indication information may include an identifier of the first control-resource set. In this manner, the access network device can flexibly control a control-resource set associated with the at least two search spaces, to improve flexibility of regulation and control of the access network device.

For example, the access network device may send the second indication information to the terminal device in a plurality of manners. For example, the access network device may send the second indication information to the terminal device by using a MAC CE or DCI. For another example, the access network device may alternatively send, by using a system message, the second indication information to a plurality of terminal devices interested in the first multicast service.

In addition, for a manner in which the access network device sends the first configuration information to the terminal device, refer to the related descriptions in which the access network device sends the configuration information to the terminal device in Embodiment 1. Details are not described again.

S1002: The access network device sends first indication information to the terminal device, where the first indication information indicates a target monitoring occasion of the first control information. Correspondingly, the terminal device may receive the first indication information.

S1003: The terminal device monitors the first control information on the target monitoring occasion.
1. The first indication information is described below.

In an example (referred to as Example 1), the first indication information may include an identifier of the first search space. Then, after receiving the first indication information, the terminal device may determine that a monitoring occasion corresponding to the first search space and a first control-resource set associated with the first search space is the target monitoring occasion of the first control information, and a monitoring occasion corresponding to another search space in the at least two search spaces and a first control-resource set associated with the another search space is a non-target monitoring occasion.

For example, the access network device may further send fourth indication information to the terminal device, where the fourth indication information may include at least one of the following: (1) an identifier of a first TCI state, (2) an identifier of the first control-resource set associated with the first search space, (3) an identifier of a cell corresponding to the first search space, and (4) an identifier of a BWP corresponding to the first search space. For functions of each piece of information, refer to the descriptions in Embodiment 1, and details are not described again.

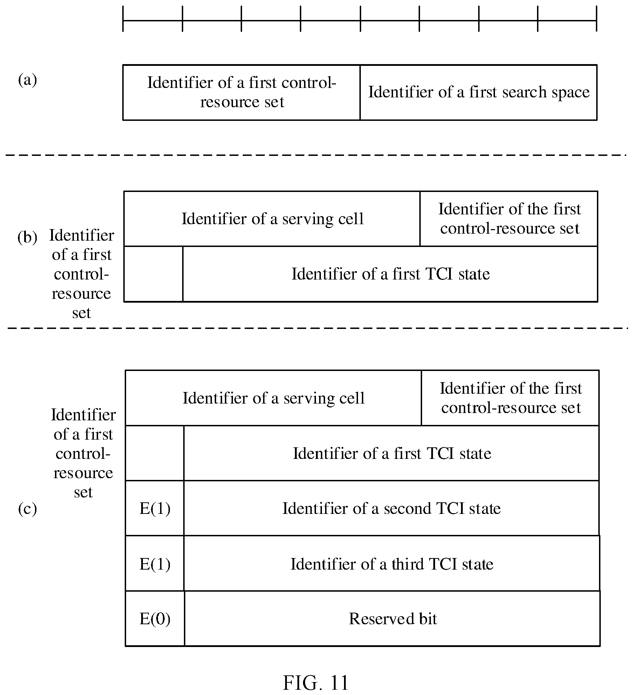

The access network device may send the foregoing information (for example, the identifier of the first search space and the identifier of the first control-resource set) to the terminal device in a plurality of manners, for example, may send the foregoing information to the terminal device by using a first MAC CE. (a) in FIG. 11 shows an example of a format of the first MAC CE. The first MAC CE may include the identifier of the first search space and the identifier of the first control-resource set.

In another example (referred to as Example 2), the first indication information may include an identifier of a first TCI state. After receiving the first indication information, the terminal device determines, based on a correspondence between a TCI state and a search space, that the first TCI state corresponds to the first search space, and then may determine that a monitoring occasion corresponding to the first search space and a first control-resource set associated with the first search space is the target monitoring occasion of the first control information, and a monitoring occasion corresponding to another search space in the at least two search spaces and a first control-resource set associated with the another search space is a non-target monitoring occasion.

For example, the access network device may further send fourth indication information to the terminal device, where the fourth indication information may include at least one of the following: (1) an identifier of the first control-resource set associated with the first search space, (2) an identifier of a cell corresponding to the first search space, and (3) an identifier of a BWP corresponding to the first search space. For functions of each piece of information, refer to the descriptions in Embodiment 1, and details are not described again.

The access network device may send the foregoing information (for example, the identifier of the first TCI state, the identifier of the serving cell, and the identifier of the first control-resource set) to the terminal device in a plurality of manners, for example, may send the foregoing information to the terminal device by using a second MAC CE. (b) in FIG. 11 shows an example of a format of the second MAC CE. The second MAC CE may include an identifier of a serving cell to which the second MAC CE is applicable, the identifier of the first control-resource set, and the identifier of the first TCI state.

In another example (referred to as Example 3), the first indication information may include identifiers of at least two TCI states. After receiving the first indication information, the terminal device may select one TCI state from the at least two TCI states (where for example, the selected TCI state is the first TCI state), determines, based on a correspondence between a TCI state and a search space, that the first TCI state corresponds to the first search space, and then may determine that a monitoring occasion corresponding to the first search space and a first control-resource set associated with the first search space is the target monitoring occasion of the first control information, and a monitoring occasion corresponding to another search space in the at least two search spaces and a first control-resource set associated with the another search space is a non-target monitoring occasion. The terminal device may select one TCI state from the at least two TCI states in a plurality of manners. For example, the terminal device may select the first TCI state from the at least two TCI states based on a TCI state for monitoring second control information, where the first TCI state is the same as the TCI state for monitoring the second control information. For example, the second control information is used to schedule information about a unicast service. For another example, the terminal device may determine beam quality corresponding to the at least two TCI states, and select the first TCI state from the at least two TCI states based on the beam quality corresponding to the at least two TCI states, where beam quality corresponding to the first TCI state is greater than or equal to beam quality corresponding to another TCI state in the at least two TCI states. For another example, the terminal device may randomly select a TCI state from the at least two TCI states.

For example, the access network device may further send fourth indication information to the terminal device, where the fourth indication information may include at least one of the following: (1) an identifier of the first control-resource set associated with the first search space, (2) an identifier of a cell corresponding to the first search space, and (3) an identifier of a BWP corresponding to the first search space. For functions of each piece of information, refer to the descriptions in Embodiment 1, and details are not described again.

The access network device may send the foregoing information (for example, the identifiers of the at least two TCI states, the identifier of the serving cell, and the identifier of the first control-resource set) to the terminal device in a plurality of manners, for example, may send the foregoing information to the terminal device by using a third MAC CE. (c) in FIG. 11 shows an example of a format of the third MAC CE. The third MAC CE may include an identifier of a serving cell to which the third MAC CE is applicable, the identifier of the first control-resource set, and the identifiers of the at least two TCI states (for example, the first TCI state, a second TCI state, and a third TCI state). An E field in the third MAC CE is an extension indication field, and the field may include one bit. When a value of the bit is 1, it indicates that the third MAC CE includes an identifier of at least one TCI state; or when a value of the bit is 0, it indicates that the third MAC CE does not include an identifier of another TCI state. In addition, the third MAC CE may further include a reserved bit, and a value of the reserved bit may be 0.

In addition, the correspondence between the TCI state and the search space in the foregoing Example 2 or Example 3 may be configured by the access network device for the terminal device. For example, the access network device sends second configuration information to the terminal device, where the second configuration information is used to configure the correspondence between the TCI state and the search space. The correspondence between the TCI state and the search space may include a correspondence between the first TCI state and the first search space. Alternatively, the correspondence between the TCI state and the search space may be predefined in a protocol. This is not specifically limited.

2. A manner in which the access network device activates the TCI state is described below.

For the foregoing Example 1, Example 2, and Example 3, in a possible implementation, for example, in the foregoing Example 1 and Example 2, the access network device may send the identifier of the first TCI state to the terminal device to implicitly indicate to activate the first TCI state. For another example, in the foregoing Example 3, the access network device may send the identifiers of the at least two TCI states to the terminal device to implicitly indicate to activate the at least two TCI states.

In another possible implementation, for example, in the foregoing Example 1 and Example 2, the access network device may first activate, for the terminal device by using a MAC CE, one or more TCI states corresponding to the first control-resource set, and then send the identifier of the first TCI state to the terminal device by using DCI, where the first TCI state belongs to the one or more activated TCI states. For another example, in the foregoing Example 3, the access network device may first activate, for the terminal device by using a MAC CE, a plurality of TCI states corresponding to the first control-resource set, and then send the identifiers of the at least two TCI states to the terminal device by using DCI, where the at least two TCI states may belong to the plurality of activated TCI states.

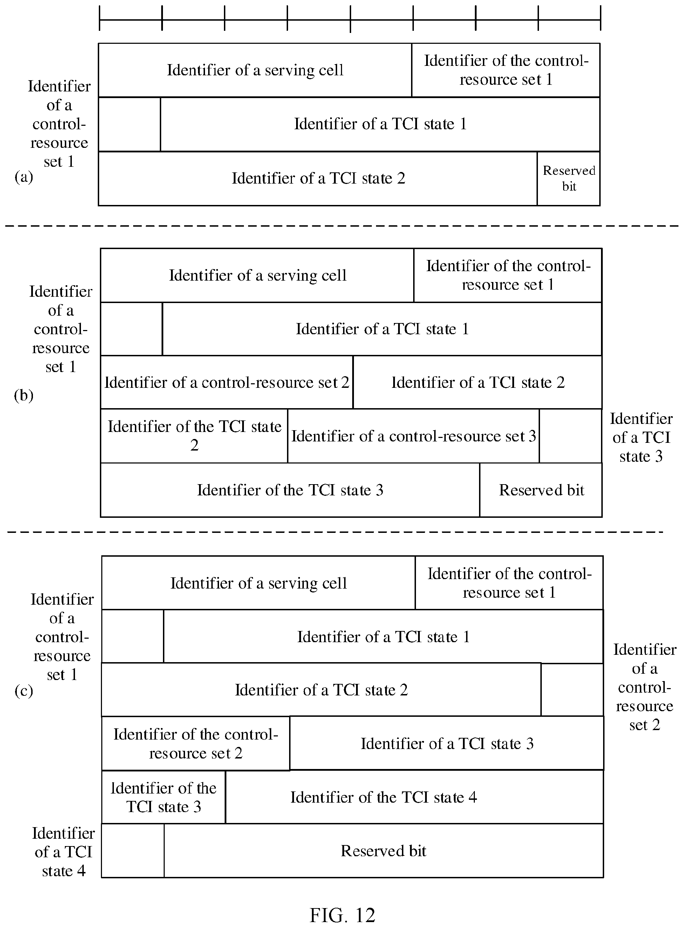

For example, the access network device may activate the TCI state by using the MAC CE in a plurality of manners. For example, the access network device may activate, by using one MAC CE, one or more TCI states corresponding to one control-resource set (for example, a control-resource set 1). For example, as shown in (a) in FIG. 12, the MAC CE may include an identifier of a serving cell, an identifier of the control-resource set 1, an identifier of a TCI state 1, and an identifier of a TCI state 2. In other words, the access network device activates, by using the MAC CE, the TCI state 1 and the TCI state 2 that correspond to the control-resource set 1. Alternatively, the access network device may activate, by using one MAC CE, one or more TCI states respectively corresponding to a plurality of control-resource sets (for example, a control-resource set 1, a control-resource set 2, and a control-resource set 3). For example, as shown in (b) in FIG. 12, the MAC CE may include an identifier of a serving cell, an identifier of the control-resource set 1, an identifier of a TCI state 1 corresponding to the control-resource set 1, an identifier of the control-resource set 2, an identifier of a TCI state 2 corresponding to the control-resource set 2, an identifier of the control-resource set 3, and an identifier of a TCI state 3 corresponding to the control-resource set 3. In other words, the access network device activates, by using the MAC CE, the TCI state 1 corresponding to the control-resource set 1, the TCI state 2 corresponding to the control-resource set 2, and the TCI state 3 corresponding to the control-resource set 3. For another example, as shown in (c) in FIG. 12, the MAC CE may include an identifier of a serving cell, an identifier of the control-resource set 1, identifiers of a TCI state 1 and a TCI state 2 that correspond to the control-resource set 1, an identifier of the control-resource set 2, and identifiers of a TCI state 3 and a TCI state 4 that correspond to the control-resource set 2. In other words, the access network device activates, by using the MAC CE, the TCI state 1 and the TCI state 2 that correspond to the control-resource set 1, and the TCI state 3 and the TCI state 4 that correspond to the control-resource set 2.

In this embodiment of this application, after the BWP is introduced, a possible implementation in which the access network device configures the TCI state for the terminal device is as follows: The access network device sends a serving cell configuration (Servingcell config) to the terminal device, where the serving cell configuration includes a BWP configuration (BWP config), and the BWP configuration includes a control-resource set configuration (CORESET config). The control-resource set may be configured with an identifier of one or more TCI states or an identifier one or more TCI state combinations, and each TCI state combination may include one or more TCI states. Therefore, when activating the TCI state for the terminal device, the MAC CE sent by the access network device to the terminal device may further include an identifier of the BWP.

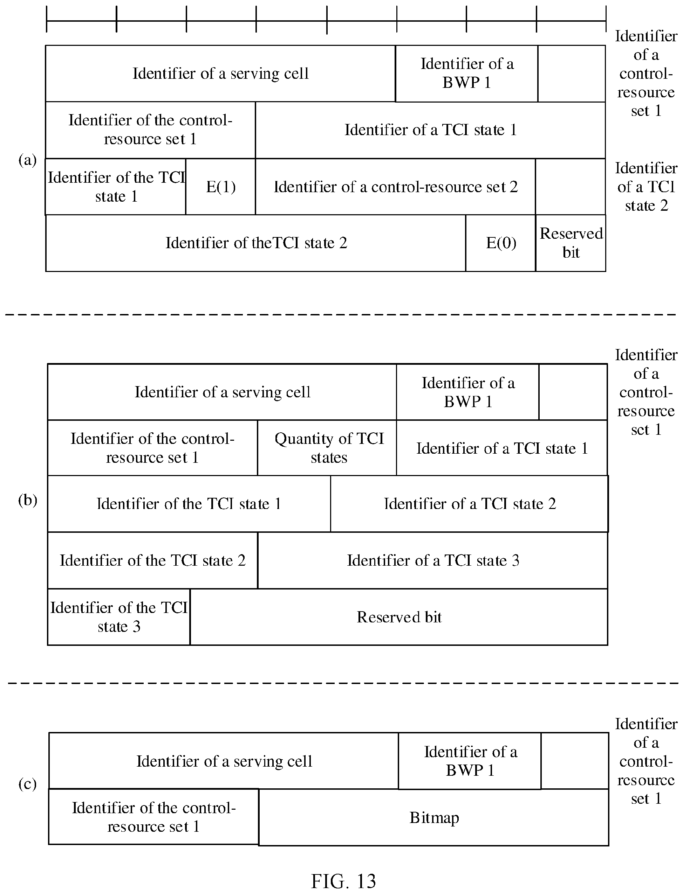

For example, as shown in (a) in FIG. 13, the MAC CE may include an identifier of a serving cell, an identifier of a BWP 1, an identifier of a control-resource set 1, an identifier of a TCI state 1, an identifier of a control-resource set 2, and an identifier of a TCI state 2. In other words, the access network device activates, by using the MAC CE, the TCI state 1 corresponding to the control-resource set 1 configured on the BWP 1 and the TCI state 2 corresponding to the control-resource set 2 configured on the BWP 1.

As shown in (b) in FIG. 13, the MAC CE may include an identifier of a serving cell, an identifier of a BWP 1, an identifier of a control-resource set 1, a quantity (for example, 3) of TCI states corresponding to the control-resource set 1, an identifier of a TCI state 1, an identifier of a TCI state 2, and an identifier of a TCI state 3. In other words, the access network device activates, by using the MAC CE, the three TCI states corresponding to the control-resource set 1 configured on the BWP 1, where the three TCI states are respectively the TCI state 1, the TCI state 2, and the TCI state 3.

As shown in (c) in FIG. 13, the MAC CE may include an identifier of a serving cell, an identifier of a BWP 1, an identifier of a control-resource set 1, and a bitmap. Each bit in the bitmap may be corresponding to one TCI state, and is specific to a bit. When a value of the bit is 1, it indicates to activate the TCI state corresponding to the bit; or when a value of the bit is 0, it indicates not to activate the TCI state corresponding to the bit. A quantity of bits included in the bitmap and a specific correspondence between the bit in the bitmap and a TCI state are not limited in this embodiment of this application.

In addition, it should be noted that, in another possible example, in (a) or (b) in FIG. 13, an identifier of the TCI state may alternatively be replaced with an identifier of a TCI state combination. In (c) in FIG. 13, each bit in the bitmap may alternatively correspond to one TCI state combination.

3. Start time and end time at which the terminal device performs monitoring on the target monitoring occasion is described below.

For example, there may be a plurality of manners in which the terminal device determines the start time for performing monitoring on the target monitoring occasion. For example, the access network device may indicate the start time to the terminal device.

In an example, the access network device may send third indication information to the terminal device. Correspondingly, the terminal device may receive the third indication information, where the third indication information indicates the start time, and then, the terminal device may determine the start time based on the third indication information. In another example, the access network device may send the first indication information to the terminal device to implicitly indicate the start time. For example, the terminal device may receive the first indication information, and determine that an end moment of receiving the first indication information is the start time. In another example, the access network device may indicate, to the terminal device, that the start time is the same as a start moment of the first search space.

It should be noted that, in another possible example, the start time may also be predefined in a protocol.

It may be understood that, in another possible example, the access network device may alternatively indicate a start monitoring occasion to the terminal device (where the monitoring occasion is a monitoring occasion corresponding to the first search space and the first control-resource set). For example, the access network device sends an identifier of the start monitoring occasion to the terminal device, and then, the terminal device may determine the start monitoring occasion. In this case, the start time may be a start boundary of the start monitoring occasion.

In this embodiment of this application, for a manner in which the terminal device determines the end time for performing monitoring on the target monitoring occasion, refer to Embodiment 1. Details are not described again.

According to the foregoing method, the access network device may configure at least two search spaces and at least one control-resource set for the terminal device, where the at least two search spaces and a control-resource set associated with the at least two search spaces correspond to the plurality of monitoring occasions of the first control information. Then, the access network device may indicate the terminal device to perform monitoring on a monitoring occasion (namely, the target monitoring occasion) corresponding to one of the search spaces and a control-resource set associated with the search space, so that unnecessary monitoring of the terminal device can be effectively reduced, and power consumption of the terminal device can be reduced.

For Embodiment 1 and Embodiment 2, it should be noted that:
(1) Embodiment 1 and Embodiment 2 may be separately implemented. For example, for Embodiment 1 and Embodiment 2, the first indication information indicates the target monitoring occasion of the first control information. However, content included in the first indication information in Embodiment 1 may be different from content included in the first indication information in Embodiment 2.
(2) The foregoing Embodiment 1 and Embodiment 2 focus on differences between the content. Except for the differences, other content in Embodiment 1 and Embodiment 2 may be cross-referenced.
(3) Step numbers in the flowcharts described in the foregoing embodiments are merely an example of an execution procedure, and do not constitute any limitation on an execution sequence of the steps. In embodiments of this application, there is no strict execution sequence between steps that do not have a time sequence dependency relationship with each other. In addition, not all the steps shown in the flowcharts are mandatory steps, and some steps may be added to or deleted from the flowcharts based on an actual requirement.

The foregoing mainly describes the solutions provided in embodiments of this application from a perspective of device interaction. It may be understood that to implement the foregoing functions, an access network device or a terminal device may include a corresponding hardware structure and/or software module for implementing each function. A person skilled in the art should be easily aware that, in embodiments of this application, the units and algorithm steps in the examples described with reference to embodiments disclosed in this specification can be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, functional unit division may be performed on the access network device or the terminal device based on the foregoing method example. For example, each functional unit may be obtained through division based on a corresponding function, or two or more functions may be integrated into one unit. The integrated unit may be implemented in a form of hardware, or may be implemented in a form of a software functional unit.

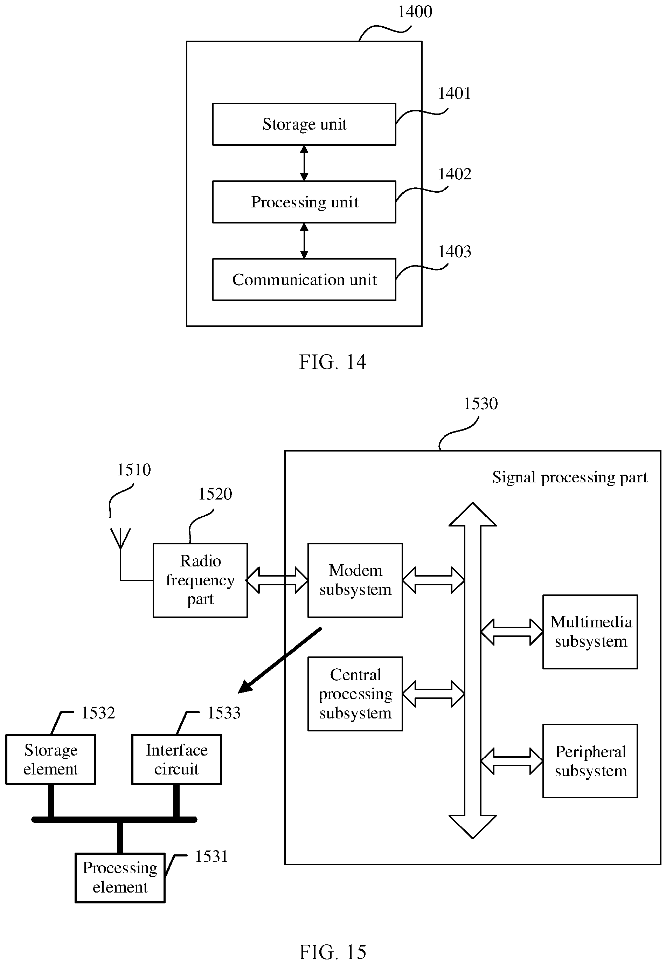

When an integrated unit is used, FIG. 14 is a block diagram of a possible example of an apparatus according to an embodiment of this application. As shown in FIG. 14, the apparatus 1400 may include a processing unit 1402 and a communication unit 1403. The processing unit 1402 is configured to control and manage an action of the apparatus 1400. The communication unit 1403 is configured to support the apparatus 1400 in communicating with another device. Optionally, the communication unit 1403 is also referred to as a transceiver unit, and may include a receiving unit and/or a sending unit, respectively configured to perform a receiving operation and a sending operation. Optionally, the apparatus 1400 may further include a storage unit 1401, configured to store program code and/or data of the apparatus 1400.

The apparatus 1400 may be the terminal device in the foregoing embodiment, or may be a chip disposed in the terminal device. The processing unit 1402 may support the apparatus 1400 in performing an action of the terminal device in the foregoing method example. Alternatively, the processing unit 1402 mainly performs an internal action of the terminal device in the method example, and the communication unit 1403 may support the apparatus 1400 in communicating with another device.

Specifically, in an embodiment, the communication unit 1403 is configured to receive first indication information, where the first indication information indicates a target monitoring occasion of first control information; and monitor the first control information on the target monitoring occasion, where the first control information is used to schedule information about a multicast service, and the target monitoring occasion includes at least one of a plurality of monitoring occasions of the first control information.

In a possible design, the communication unit 1403 is further configured to receive configuration information, where the configuration information is used to configure a first search space of the multicast service and at least one control-resource set of the multicast service, and the at least one control-resource set includes a first control-resource set, where the first search space is associated with the first control-resource set, and the first search space and the first control-resource set correspond to the plurality of monitoring occasions.

In a possible design, the at least one control-resource set further includes a second control-resource set; and the communication unit 1403 is further configured to: receive second indication information, where the second indication information indicates to switch the second control-resource set associated with the first search space to the first control-resource set.

In a possible design, the first indication information includes at least one of the following: (1) monitoring periodicity information, where the monitoring periodicity information indicates a periodicity of monitoring the first control information; (2) offset information, where the offset information indicates an offset of the target monitoring occasion in the periodicity; and (3) monitoring duration information, where the monitoring duration information indicates duration for monitoring the first control information in the periodicity.

In a possible design, the monitoring periodicity information includes at least one of the following: a quantity of radio frames included in the periodicity, a quantity of radio subframes included in the periodicity, a quantity of slots included in the periodicity, a quantity of symbols included in the periodicity, and a quantity of monitoring occasions included in the periodicity; the offset information includes at least one of the following: a quantity of radio frames included in the offset, a quantity of radio subframes included in the offset, a quantity of slots included in the offset, a quantity of symbols included in the offset, and a quantity of monitoring occasions included in the offset; and the monitoring duration information includes at least one of the following: a quantity of radio frames included in the duration, a quantity of radio subframes included in the duration, a quantity of slots included in the duration, a quantity of symbols included in the duration, and a quantity of monitoring occasions included in the duration, where the monitoring occasion included in the duration is the target monitoring occasion.

In a possible design, a start moment of the periodicity is determined based on received third indication information; or a start moment of the periodicity is an end moment of receiving the first indication information.

In a possible design, the third indication information includes at least one of the following: an identifier of the radio frame, an identifier of the radio subframe, an identifier of the slot, and an identifier of the symbol.

In a possible design, a start monitoring occasion included in the periodicity is the 1^{st} monitoring occasion that is located after the start moment in the plurality of monitoring occasions; or the start monitoring occasion is a monitoring occasion that is closest to the start moment in the plurality of monitoring occasions.

In a possible design, the communication unit 1403 is further configured to receive fourth indication information, where the fourth indication information includes at least one of the following: an identifier of a first TCI state, an identifier of a cell corresponding to the first search space, and an identifier of a BWP corresponding to the first search space, where the identifier of the first TCI state is used to determine a beam for monitoring the first control information.

In a possible design, the communication unit 1403 is further configured to: receive first configuration information, where the first configuration information is used to configure at least two search spaces of the multicast service and at least one control-resource set of the multicast service, and the at least one control-resource set includes a first control-resource set, where the at least two search spaces are associated with the first control-resource set, and the at least two search spaces and the first control-resource set correspond to the plurality of monitoring occasions.

In a possible design, the first indication information includes an identifier of a first search space in the at least two search spaces; and the first search space and the first control-resource set correspond to the target monitoring occasion.

In a possible design, the first indication information includes an identifier of at least one TCI state; and the processing unit 1402 is configured to: select a first TCI state from the at least one TCI state; determine, based on a correspondence between a TCI state and a search space, that the first TCI state corresponds to a first search space; and determine that a monitoring occasion corresponding to the first search space and the first control-resource set is the target monitoring occasion.

In a possible design, the processing unit 1402 is specifically configured to: determine a TCI state used to monitor second control information, where the second control information is used to schedule information about a unicast service; and select the first TCI state from the at least one TCI state based on the TCI state used to monitor the second control information, where the first TCI state is the same as the TCI state used to monitor the second control information; or determine beam quality corresponding to the at least one TCI state; and select the first TCI state from the at least one TCI state based on the beam quality corresponding to the at least one TCI state, where beam quality corresponding to the first TCI state is greater than or equal to beam quality corresponding to another TCI state in the at least one TCI state.

The apparatus 1400 may be the access network device in the foregoing embodiment, or may be a chip disposed in the access network device. The processing unit 1402 may support the apparatus 1400 in performing an action of the access network device in the foregoing method example. Alternatively, the processing unit 1402 mainly performs an internal action of the access network device in the method example, and the communication unit 1403 may support the apparatus 1400 in communicating with another device.

Specifically, in an embodiment, the processing unit 1402 is configured to determine first indication information, where the first indication information indicates a target monitoring occasion of first control information, and the first control information is used to schedule information about a multicast service; and the communication unit 1403 is configured to send the first indication information to a terminal device, where the target monitoring occasion includes at least one of a plurality of monitoring occasions of the first control information.

In a possible design, the communication unit 1403 is further configured to send configuration information to the terminal device, where the configuration information is used to configure a first search space of the multicast service and at least one control-resource set of the multicast service, and the at least one control-resource set includes a first control-resource set, where the first search space is associated with the first control-resource set, and the first search space and the first control-resource set correspond to the plurality of monitoring occasions.

In a possible design, the at least one control-resource set further includes a second control-resource set; and the communication unit 1403 is further configured to: send second indication information to the terminal device, where the second indication information indicates to switch the second control-resource set associated with the first search space to the first control-resource set.

In a possible design, the first indication information includes at least one of the following: (1) monitoring periodicity information, where the monitoring periodicity information indicates a periodicity of monitoring the first control information; (2) offset information, where the offset information indicates an offset of the target monitoring occasion in the periodicity; and (3) monitoring duration information, where the monitoring duration information indicates duration for monitoring the first control information in the periodicity.

In a possible design, the monitoring periodicity information includes at least one of the following: a quantity of radio frames included in the periodicity, a quantity of radio subframes included in the periodicity, a quantity of slots included in the periodicity, a quantity of symbols included in the periodicity, and a quantity of monitoring occasions included in the periodicity; the offset information includes at least one of the following: a quantity of radio frames included in the offset, a quantity of radio subframes included in the offset, a quantity of slots included in the offset, a quantity of symbols included in the offset, and a quantity of monitoring occasions included in the offset; and the monitoring duration information includes at least one of the following: a quantity of radio frames included in the duration, a quantity of radio subframes included in the duration, a quantity of slots included in the duration, a quantity of symbols included in the duration, and a quantity of monitoring occasions included in the duration, where the monitoring occasion included in the duration is the target monitoring occasion.

In a possible design, the communication unit 1403 is further configured to: send third indication information to the terminal device, where the third indication information indicates a start moment of the periodicity.

In a possible design, the third indication information includes at least one of the following: an identifier of the radio frame, an identifier of the radio subframe, an identifier of the slot, and an identifier of the symbol.

In a possible design, a start monitoring occasion included in the periodicity is the 1^{st} monitoring occasion that is located after the start moment in the plurality of monitoring occasions; or the start monitoring occasion is a monitoring occasion that is closest to the start moment in the plurality of monitoring occasions.

In a possible design, the communication unit 1403 is further configured to: send fourth indication information to the terminal device, where the fourth indication information includes at least one of the following: an identifier of a first transmission configuration indicator TCI state, an identifier of a cell corresponding to the first search space, and an identifier of a BWP corresponding to the first search space, where the identifier of the first TCI state is used by the terminal device to determine a beam for monitoring the first control information.

In a possible design, the communication unit 1403 is further configured to: send first configuration information to the terminal device, where the first configuration information is used to configure at least two search spaces of the multicast service and at least one control-resource set of the multicast service, and the at least one control-resource set includes a first control-resource set, where the at least two search spaces are associated with the first control-resource set, and the at least two search spaces and the first control-resource set correspond to the plurality of monitoring occasions.

In a possible design, the first indication information includes an identifier of a first search space in the at least two search spaces; and the first search space and the first control-resource set correspond to the target monitoring occasion.

In a possible design, the first indication information includes an identifier of at least one TCI state; and the at least one TCI state includes a first TCI state, the first TCI state corresponds to a first search space, and the first search space and the first control-resource set correspond to the target monitoring occasion.

It should be understood that division of units in the apparatus is merely logical function division. During actual implementation, all or some of the units may be integrated into one physical entity or may be physically separated. In addition, all the units in the apparatus may be implemented in a form in which a processing element invokes software, or may be implemented in a form of hardware; or some units may be implemented in a form in which a processing element invokes software, and some units are implemented in a form of hardware. For example, units may be separately disposed processing elements, or may be integrated into a chip of the apparatus for implementation. In addition, the units may be stored in a memory in a program form, and is invoked by a processing element of the apparatus to perform functions of the units. In addition, such units may be integrated together or may be individually implemented. The processing element herein may also be referred to as a processor, and may be an integrated circuit having a signal processing capability. In an implementation process, operations in the foregoing methods or the foregoing units may be implemented by using a hardware integrated logic circuit in the processor element, or may be implemented in a form in which the processing element invokes software.

In an example, a unit in any one of the foregoing apparatuses may be one or more integrated circuits configured to implement the foregoing methods, for example, one or more application-specific integrated circuits (application-specific integrated circuits, ASICs), one or more microprocessors (digital signal processors, DSPs), one or more field programmable gate arrays (field programmable gate arrays, FPGAs), or a combination of at least two of these forms of integrated circuits. For another example, when the units in the apparatus may be implemented in a form in which a processing element schedules a program, the processing element may be a processor, for example, a general-purpose central processing unit (central processing unit, CPU) or another processor that can invoke the program. For another example, the units may be integrated together and implemented in a form of a system-on-a-chip (system-on-a-chip, SOC).

The foregoing unit configured for receiving is an interface circuit of the apparatus, and is configured to receive a signal from another apparatus. For example, when the apparatus is implemented in a manner of a chip, the receiving unit is an interface circuit that is of the chip and that is configured to receive a signal from another chip or apparatus. The foregoing unit configured for sending is an interface circuit of the apparatus, and is configured to send a signal to another apparatus. For example, when the apparatus is implemented in the manner of the chip, the sending unit is an interface circuit that is of the chip and that is configured to send a signal to another chip or apparatus.

FIG. 15 is a schematic diagram of a structure of a terminal device according to an embodiment of this application. The terminal device may be the terminal device in the foregoing embodiment, and is configured to implement operations of the terminal device in the foregoing embodiment. As shown in FIG. 15, the terminal device includes an antenna 1510, a radio frequency part 1520, and a signal processing part 1530. The antenna 1510 is connected to the radio frequency part 1520. In a downlink direction, the radio frequency part 1520 receives, through the antenna 1510, information sent by a network device, and sends, to the signal processing part 1530 for processing, the information sent by the network device. In an uplink direction, the signal processing part 1530 processes information about the terminal device, and sends the information to the radio frequency part 1520. The radio frequency part 1520 processes the information about the terminal device, and then sends the processed information to the network device through the antenna 1510.

The signal processing part 1530 may include a modem subsystem, configured to process data at each communication protocol layer. The signal processing part 1530 may further include a central processing subsystem, configured to implement processing of an operating system and an application layer of the terminal device. In addition, the signal processing part 1530 may further include another subsystem, for example, a multimedia subsystem or a peripheral subsystem. The multimedia subsystem is configured to control a camera, a screen display, and the like of the terminal device, and the peripheral subsystem is configured to implement a connection to another device. The modem subsystem may be a separately disposed chip.

The modem subsystem may include one or more processing elements 1531, for example, include a main control CPU and another integrated circuit. In addition, the modem subsystem may further include a storage element 1532 and an interface circuit 1533. The storage element 1532 is configured to store data and a program. However, a program used to perform the method performed by the terminal device in the foregoing method may not be stored in the storage element 1532, but is stored in a memory outside the modem subsystem, and is loaded and used by the modem subsystem when to be used. The interface circuit 1533 is configured to communicate with another subsystem.

The modem subsystem may be implemented by using a chip. The chip includes at least one processing element and an interface circuit. The processing element is configured to perform the steps of any method performed by the terminal device. The interface circuit is configured to communicate with another apparatus. In an implementation, units of the terminal device that implement the steps in the foregoing methods may be implemented by a program scheduled by a processing element. For example, the apparatus used for the terminal device includes a processing element and a storage element. The processing element invokes a program stored in the storage element, to perform the method performed by the terminal device in the foregoing method embodiment. The storage element may be a storage element whose processing element is located on a same chip, that is, an on-chip storage element.

In another implementation, the program used to perform the method performed by the terminal device in the foregoing method may be in a storage element located on a different chip from the processing element, that is, an off-chip storage element. In this case, the processing element invokes or loads the program from the off-chip storage element to the on-chip storage element, to invoke and perform the method performed by the terminal device in the foregoing method embodiment.

In still another implementation, units of the terminal device that implement the steps in the foregoing method may be configured as one or more processing elements. The processing elements are disposed in the modem subsystem. The processing element herein may be an integrated circuit, for example, one or more ASICs, one or more DSPs, one or more FPGAs, or a combination of the types of integrated circuits. The integrated circuits may be integrated together to form a chip.

Units of the terminal device that implement the steps in the foregoing method may be integrated together, and implemented in a form of SOC. The SOC chip is configured to implement the foregoing method. At least one processing element and a storage element may be integrated into the chip, and the processing element invokes a program device stored in the storage element to implement the foregoing method performed by the terminal device. Alternatively, at least one integrated circuit may be integrated into the chip, to implement the foregoing method performed by the terminal device. Alternatively, with reference to the foregoing implementations, functions of some units may be implemented by a program invoked by the processing element, and functions of some units are implemented by the integrated circuit.

It can be learned that the foregoing apparatus used for the terminal device may include at least one processing element and an interface circuit. The at least one processing element is configured to perform any one of the methods that are performed by the terminal device and that are provided in the foregoing method embodiments. The processing element may perform some or all steps performed by the terminal device, in a first manner, to be specific, by invoking the program stored in the storage element; or may perform some or all steps performed by the terminal device, in a second manner, to be specific, by using a hardware integrated logical circuit in the processing element in combination with instructions; or may certainly perform, by combining the first manner and the second manner, some or all steps performed by the terminal device.

The processing element herein is the same as that described above, and may be implemented by using a processor. A function of the processing element may be the same as a function of the processing unit described in FIG. 14. For example, the processing element may be a general-purpose processor, for example, a CPU, or may be one or more integrated circuits configured to implement the foregoing method, for example, one or more ASICs, one or more micro processors DSPs, or one or more FPGAs, or a combination of at least two of the integrated circuit forms. The storage element may be implemented by using a memory. A function of the storage element may be the same as a function of the storage unit described in FIG. 14. The storage element may be implemented by using a memory. A function of the storage element may be the same as a function of the storage unit described in FIG. 14. The storage element may be a memory, or may be a general name of a plurality of memories.

The terminal device shown in FIG. 15 can implement processes related to the terminal device in the foregoing method embodiment. Operations and/or functions of modules in the terminal device shown in FIG. 15 are respectively intended to implement corresponding procedures in the foregoing method embodiment. For details, refer to the descriptions in the foregoing method embodiments. To avoid repetition, detailed descriptions are properly omitted herein.

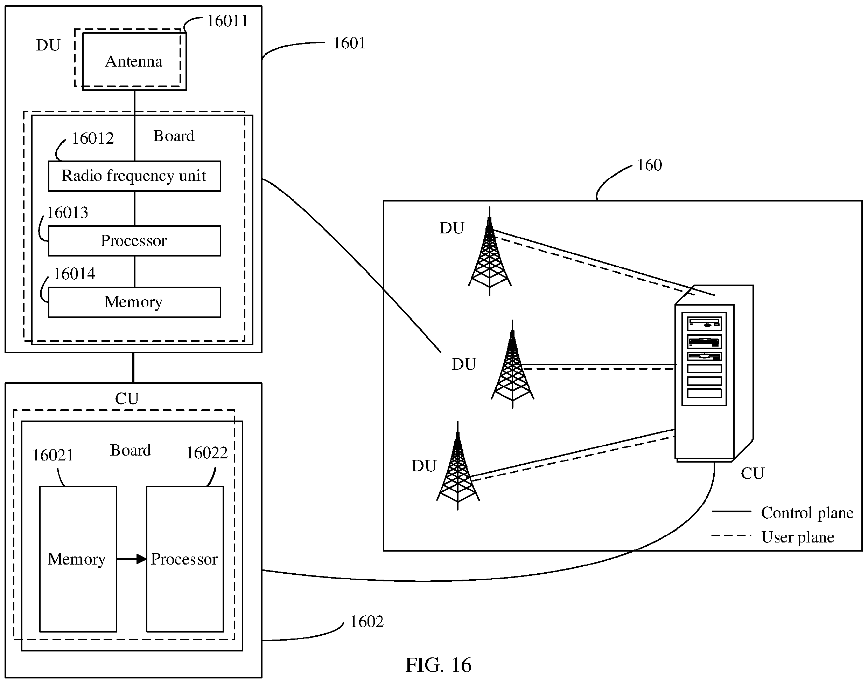

FIG. 16 is a schematic diagram of a structure of an access network device according to an embodiment of this application. The access network device (or a base station) may be used in the system architecture shown in FIG. 1, to perform functions of the access network device in the foregoing method embodiment. The access network device 160 may include one or more DUs 1601 and one or more CUs 1602. The DU 1601 may include at least one antenna 16011, at least one radio frequency unit 16012, at least one processor 16013, and at least one memory 16014. The DU 1601 is mainly configured to: send and receive a radio frequency signal, perform conversion between the radio frequency signal and a baseband signal, and perform some baseband processing. The CU 1602 may include at least one processor 16022 and at least one memory 16021.

The CU 1602 is mainly configured to: perform baseband processing, control the access network device, and the like. The DU 1601 and the CU 1602 may be physically disposed together, or may be physically disposed separately, namely, a distributed base station. The CU 1602 is a control center of the access network device, may also be referred to as a processing unit, and is mainly configured to complete a baseband processing function. For example, the CU 1602 may be configured to control the access network device to perform operation procedures related to the access network device in the foregoing method embodiment.

In addition, optionally, the access network device 160 may include one or more radio frequency units, one or more DUs, and one or more CUs. The DU may include the at least one processor 16013 and the at least one memory 16014, the radio frequency unit may include the at least one antenna 16011 and the at least one radio frequency unit 16012, and the CU may include the at least one processor 16022 and the at least one memory 16021.

In an example, the CU 1602 may include one or more boards. A plurality of boards may jointly support a radio access network (for example, a 5G network) of a single access standard, or may separately support radio access networks (such as an LTE network, a 5G network, or another network) of different access standards. The memory 16021 and the processor 16022 may serve one or more boards. In other words, the memory and processor can be separately disposed on each board. Alternatively, a plurality of boards may share a same memory and a same processor. In addition, a necessary circuit may be further disposed on each board. The DU 1601 may include one or more boards. A plurality of boards may jointly support a radio access network (for example, a 5G network) of a single access standard, or may separately support radio access networks (such as an LTE network, a 5G network, or another network) of different access standards. The memory 16014 and the processor 16013 may serve one or more boards. In other words, the memory and processor can be separately disposed on each board. Alternatively, a plurality of boards may share a same memory and a same processor. In addition, a necessary circuit may be further disposed on each board.

The access network device shown in FIG. 16 can implement processes related to the access network device in the foregoing method embodiment. Operations and/or functions of modules in the access network device shown in FIG. 16 are respectively intended to implement corresponding procedures in the foregoing method embodiment. For details, refer to the descriptions in the foregoing method embodiments. To avoid repetition, detailed descriptions are properly omitted herein.

The terms "system" and "network" may be used interchangeably in embodiments of this application. The term "at least one" means one or more, and the term "a plurality of" means two or more. The term "and/or" describes an association relationship between associated objects and represents that three relationships may exist. For example, A and/or B may represent the following cases: Only A exists, both A and B exist, and only B exists, where A and B may be singular or plural. The character "/" generally indicates an "or" relationship between the associated objects. "At least one item (piece) of the following" or a similar expression thereof means any combination of the items, including any combination of singular items (pieces) or plural items (pieces). For example, "at least one of A, B, and C" includes A, B, C, AB, AC, BC, or ABC. In addition, unless otherwise specified, ordinal numbers such as "first" and "second" mentioned in embodiments of this application are used to distinguish between a plurality of objects, but are not used to limit a sequence, a time sequence, priorities, or importance of the plurality of objects.

A person skilled in the art should understand that embodiments of this application may be provided as a method, a system, or a computer program product. Therefore, this application may use a form of a hardware-only embodiment, a software-only embodiment, or an embodiment with a combination of software and hardware. In addition, this application may use a form of a computer program product that is implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. The computer program instructions may be provided for a general-purpose computer, a dedicated computer, an embedded processor, or a processor of another programmable data processing device to generate a machine, so that the instructions executed by the computer or the processor of another programmable data processing device generate an apparatus for implementing a specific function in one or more processes in the flowcharts and/or in one or more blocks in the block diagrams.

The computer program instructions may be stored in a computer-readable memory that can instruct the computer or another programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

The computer program instructions may be loaded onto the computer or another programmable data processing device, so that a series of operations and steps are performed on the computer or the another programmable device, to generate computer-implemented processing. Therefore, the instructions executed on the computer or the another programmable device provide steps for implementing a specific function in one or more processes in the flowcharts and/or in one or more blocks in the block diagrams. It is clear that a person skilled in the art can make various modifications and variations to this application without departing from the spirit and scope of this application. This application is intended to cover the modifications and variations of this application provided that they fall within the scope of the following claims and equivalent technologies of this application.

## Claims

1. A communication method, wherein the method is applicable to a terminal device, and the method comprises:
receiving first indication information, wherein the first indication information indicates a target monitoring occasion of first control information; and
monitoring the first control information on the target monitoring occasion, wherein the first control information is used to schedule information about a multicast service, and
the target monitoring occasion comprises at least one of a plurality of monitoring occasions of the first control information.

2. The method according to claim 1, wherein the method further comprises:
receiving configuration information, wherein the configuration information is used to configure a first search space of the multicast service and at least one control-resource set of the multicast service, and the at least one control-resource set comprises a first control-resource set, wherein
the first search space is associated with the first control-resource set, and the first search space and the first control-resource set correspond to the plurality of monitoring occasions.

3. The method according to claim 2, wherein the at least one control-resource set further comprises a second control-resource set; and
the method further comprises:
receiving second indication information, wherein the second indication information indicates to switch the second control-resource set associated with the first search space to the first control-resource set.

4. The method according to claim 2 or 3, wherein the first indication information comprises at least one of the following:
monitoring periodicity information, wherein the monitoring periodicity information indicates a periodicity of monitoring the first control information;
offset information, wherein the offset information indicates an offset of the target monitoring occasion in the periodicity; and
monitoring duration information, wherein the monitoring duration information indicates duration for monitoring the first control information in the periodicity.

5. The method according to claim 4, wherein
the monitoring periodicity information comprises at least one of the following:
a quantity of radio frames comprised in the periodicity, a quantity of radio subframes comprised in the periodicity, a quantity of slots comprised in the periodicity, a quantity of symbols comprised in the periodicity, and a quantity of monitoring occasions comprised in the periodicity;
the offset information comprises at least one of the following:
a quantity of radio frames comprised in the offset, a quantity of radio subframes comprised in the offset, a quantity of slots comprised in the offset, a quantity of symbols comprised in the offset, and a quantity of monitoring occasions comprised in the offset; and
the monitoring duration information comprises at least one of the following:
a quantity of radio frames comprised in the duration, a quantity of radio subframes comprised in the duration, a quantity of slots comprised in the duration, a quantity of symbols comprised in the duration, and a quantity of monitoring occasions comprised in the duration, wherein the monitoring occasion comprised in the duration is the target monitoring occasion.

6. The method according to claim 4 or 5, wherein a start moment of the periodicity is determined based on received third indication information; or
a start moment of the periodicity is an end moment of receiving the first indication information.

7. The method according to claim 6, wherein the third indication information comprises at least one of the following:
an identifier of the radio frame, an identifier of the radio subframe, an identifier of the slot, and an identifier of the symbol.

8. The method according to claim 6 or 7, wherein a start monitoring occasion comprised in the periodicity is the 1^{st} monitoring occasion that is located after the start moment in the plurality of monitoring occasions; or
the start monitoring occasion is a monitoring occasion that is closest to the start moment in the plurality of monitoring occasions.

9. The method according to any one of claims 2 to 7, wherein the method further comprises:
receiving fourth indication information, wherein the fourth indication information comprises at least one of the following: an identifier of a first transmission configuration indicator TCI state, an identifier of a cell corresponding to the first search space, and an identifier of a BWP corresponding to the first search space, wherein the identifier of the first TCI state is used to determine a beam for monitoring the first control information.

10. The method according to claim 1, wherein the method further comprises:
receiving first configuration information, wherein the first configuration information is used to configure at least two search spaces of the multicast service and at least one control-resource set of the multicast service, and the at least one control-resource set comprises a first control-resource set, wherein
the at least two search spaces are associated with the first control-resource set, and the at least two search spaces and the first control-resource set correspond to the plurality of monitoring occasions.

11. The method according to claim 10, wherein the first indication information comprises an identifier of a first search space in the at least two search spaces; and
the first search space and the first control-resource set correspond to the target monitoring occasion.

12. The method according to claim 10, wherein the first indication information comprises an identifier of at least one TCI state; and
the method further comprises:
selecting a first TCI state from the at least one TCI state;
determining, based on a correspondence between a TCI state and a search space, that the first TCI state corresponds to a first search space; and
determining that a monitoring occasion corresponding to the first search space and the first control-resource set is the target monitoring occasion.

13. The method according to claim 12, wherein the selecting a first TCI state from the at least one TCI state comprises:
determining a TCI state used to monitor second control information, wherein the second control information is used to schedule information about a unicast service; and selecting the first TCI state from the at least one TCI state based on the TCI state used to monitor the second control information, wherein the first TCI state is the same as the TCI state used to monitor the second control information; or
determining beam quality corresponding to the at least one TCI state; and selecting the first TCI state from the at least one TCI state based on the beam quality corresponding to the at least one TCI state, wherein beam quality corresponding to the first TCI state is greater than or equal to beam quality corresponding to another TCI state in the at least one TCI state.

14. A communication method, wherein the method is applicable to an access network device, and the method comprises:
determining first indication information, wherein the first indication information indicates a target monitoring occasion of first control information, and the first control information is used to schedule information about a multicast service; and
sending the first indication information to a terminal device, wherein
the target monitoring occasion comprises at least one of a plurality of monitoring occasions of the first control information.

15. The method according to claim 14, wherein the method further comprises:
sending configuration information to the terminal device, wherein the configuration information is used to configure a first search space of the multicast service and at least one control-resource set of the multicast service, and the at least one control-resource set comprises a first control-resource set, wherein
the first search space is associated with the first control-resource set, and the first search space and the first control-resource set correspond to the plurality of monitoring occasions.

16. The method according to claim 15, wherein the at least one control-resource set further comprises a second control-resource set; and
the method further comprises:
sending second indication information to the terminal device, wherein the second indication information indicates to switch the second control-resource set associated with the first search space to the first control-resource set.

17. The method according to claim 15 or 16, wherein the first indication information comprises at least one of the following:
monitoring periodicity information, wherein the monitoring periodicity information indicates a periodicity of monitoring the first control information;
offset information, wherein the offset information indicates an offset of the target monitoring occasion in the periodicity; and
monitoring duration information, wherein the monitoring duration information indicates duration for monitoring the first control information in the periodicity.

18. The method according to claim 17, wherein
the monitoring periodicity information comprises at least one of the following:
a quantity of radio frames comprised in the periodicity, a quantity of radio subframes comprised in the periodicity, a quantity of slots comprised in the periodicity, a quantity of symbols comprised in the periodicity, and a quantity of monitoring occasions comprised in the periodicity;
the offset information comprises at least one of the following:
a quantity of radio frames comprised in the offset, a quantity of radio subframes comprised in the offset, a quantity of slots comprised in the offset, a quantity of symbols comprised in the offset, and a quantity of monitoring occasions comprised in the offset; and
the monitoring duration information comprises at least one of the following:
a quantity of radio frames comprised in the duration, a quantity of radio subframes comprised in the duration, a quantity of slots comprised in the duration, a quantity of symbols comprised in the duration, and a quantity of monitoring occasions comprised in the duration, wherein the monitoring occasion comprised in the duration is the target monitoring occasion.

19. The method according to claim 17 or 18, wherein the method further comprises: sending third indication information to the terminal device, wherein the third indication information indicates a start moment of the periodicity.

20. The method according to claim 19, wherein the third indication information comprises at least one of the following:
an identifier of the radio frame, an identifier of the radio subframe, an identifier of the slot, and an identifier of the symbol.

21. The method according to claim 19 or 20, wherein a start monitoring occasion comprised in the periodicity is the 1^{st} monitoring occasion that is located after the start moment in the plurality of monitoring occasions; or
the start monitoring occasion is a monitoring occasion that is closest to the start moment in the plurality of monitoring occasions.

22. The method according to any one of claims 15 to 21, wherein the method further comprises:
sending fourth indication information to the terminal device, wherein the fourth indication information comprises at least one of the following: an identifier of a first transmission configuration indicator TCI state, an identifier of a cell corresponding to the first search space, and an identifier of a BWP corresponding to the first search space, wherein the identifier of the first TCI state is used by the terminal device to determine a beam for monitoring the first control information.

23. The method according to claim 14, wherein the method further comprises:
sending first configuration information to the terminal device, wherein the first configuration information is used to configure at least two search spaces of the multicast service and at least one control-resource set of the multicast service, and the at least one control-resource set comprises a first control-resource set, wherein
the at least two search spaces are associated with the first control-resource set, and the at least two search spaces and the first control-resource set correspond to the plurality of monitoring occasions.

24. The method according to claim 23, wherein the first indication information comprises an identifier of a first search space in the at least two search spaces; and
the first search space and the first control-resource set correspond to the target monitoring occasion.

25. The method according to claim 23, wherein the first indication information comprises an identifier of at least one TCI state; and
the at least one TCI state comprises a first TCI state, the first TCI state corresponds to a first search space, and the first search space and the first control-resource set correspond to the target monitoring occasion.

26. A communication apparatus, comprising:
a transceiver unit, configured to receive first indication information, wherein the first indication information indicates a target monitoring occasion of first control information; and
a processing unit, configured to monitor the first control information on the target monitoring occasion, wherein the first control information is used to schedule information about a multicast service, and
the target monitoring occasion comprises at least one of a plurality of monitoring occasions of the first control information.

27. The apparatus according to claim 26, wherein the transceiver unit is further configured to:
receive configuration information, wherein the configuration information is used to configure a first search space of the multicast service and at least one control-resource set of the multicast service, and the at least one control-resource set comprises a first control-resource set, wherein
the first search space is associated with the first control-resource set, and the first search space and the first control-resource set correspond to the plurality of monitoring occasions.

28. The apparatus according to claim 27, wherein the at least one control-resource set further comprises a second control-resource set; and the transceiver unit is further configured to:
receive second indication information, wherein the second indication information indicates to switch the second control-resource set associated with the first search space to the first control-resource set.

29. The apparatus according to claim 27 or 28, wherein the first indication information comprises at least one of the following:
monitoring periodicity information, wherein the monitoring periodicity information indicates a periodicity of monitoring the first control information;
offset information, wherein the offset information indicates an offset of the target monitoring occasion in the periodicity; and
monitoring duration information, wherein the monitoring duration information indicates duration for monitoring the first control information in the periodicity.

30. The apparatus according to claim 29, wherein
the monitoring periodicity information comprises at least one of the following:
a quantity of radio frames comprised in the periodicity, a quantity of radio subframes comprised in the periodicity, a quantity of slots comprised in the periodicity, a quantity of symbols comprised in the periodicity, and a quantity of monitoring occasions comprised in the periodicity;
the offset information comprises at least one of the following:
a quantity of radio frames comprised in the offset, a quantity of radio subframes comprised in the offset, a quantity of slots comprised in the offset, a quantity of symbols comprised in the offset, and a quantity of monitoring occasions comprised in the offset; and
the monitoring duration information comprises at least one of the following:
a quantity of radio frames comprised in the duration, a quantity of radio subframes comprised in the duration, a quantity of slots comprised in the duration, a quantity of symbols comprised in the duration, and a quantity of monitoring occasions comprised in the duration, wherein the monitoring occasion comprised in the duration is the target monitoring occasion.

31. The apparatus according to claim 29 or 30, wherein a start moment of the periodicity is determined based on received third indication information; or
a start moment of the periodicity is an end moment of receiving the first indication information.

32. The apparatus according to claim 31, wherein the third indication information comprises at least one of the following: an identifier of the radio frame, an identifier of the radio subframe, an identifier of the slot, and an identifier of the symbol.

33. The apparatus according to claim 31 or 32, wherein a start monitoring occasion comprised in the periodicity is the 1^{st} monitoring occasion that is located after the start moment in the plurality of monitoring occasions; or
the start monitoring occasion is a monitoring occasion that is closest to the start moment in the plurality of monitoring occasions.

34. The apparatus according to any one of claims 27 to 32, wherein the transceiver unit is further configured to:
receive fourth indication information, wherein the fourth indication information comprises at least one of the following: an identifier of a first transmission configuration indicator TCI state, an identifier of a cell corresponding to the first search space, and an identifier of a BWP corresponding to the first search space, wherein the identifier of the first TCI state is used to determine a beam for monitoring the first control information.

35. The apparatus according to claim 26, wherein the transceiver unit is further configured to:
receive first configuration information, wherein the first configuration information is used to configure at least two search spaces of the multicast service and at least one control-resource set of the multicast service, and the at least one control-resource set comprises a first control-resource set, wherein
the at least two search spaces are associated with the first control-resource set, and the at least two search spaces and the first control-resource set correspond to the plurality of monitoring occasions.

36. The apparatus according to claim 35, wherein the first indication information comprises an identifier of a first search space in the at least two search spaces; and
the first search space and the first control-resource set correspond to the target monitoring occasion.

37. The apparatus according to claim 35, wherein the first indication information comprises an identifier of at least one TCI state; and the processing unit is further configured to:
select a first TCI state from the at least one TCI state;
determine, based on a correspondence between a TCI state and a search space, that the first TCI state corresponds to a first search space; and
determine that a monitoring occasion corresponding to the first search space and the first control-resource set is the target monitoring occasion.

38. The apparatus according to claim 37, wherein the processing unit is specifically configured to:
determine a TCI state used to monitor second control information, wherein the second control information is used to schedule information about a unicast service; and select the first TCI state from the at least one TCI state based on the TCI state used to monitor the second control information, wherein the first TCI state is the same as the TCI state used to monitor the second control information; or
determine beam quality corresponding to the at least one TCI state; and select the first TCI state from the at least one TCI state based on the beam quality corresponding to the at least one TCI state, wherein beam quality corresponding to the first TCI state is greater than or equal to beam quality corresponding to another TCI state in the at least one TCI state.

39. A communication apparatus, comprising:
a processing unit, configured to determining first indication information, wherein the first indication information indicates a target monitoring occasion of first control information, and the first control information is used to schedule information about a multicast service; and
a transceiver unit, configured to send the first indication information to a terminal device, wherein
the target monitoring occasion comprises at least one of a plurality of monitoring occasions of the first control information.

40. The apparatus according to claim 39, wherein the transceiver unit is further configured to:
send configuration information to the terminal device, wherein the configuration information is used to configure a first search space of the multicast service and at least one control-resource set of the multicast service, and the at least one control-resource set comprises a first control-resource set, wherein
the first search space is associated with the first control-resource set, and the first search space and the first control-resource set correspond to the plurality of monitoring occasions.

41. The apparatus according to claim 40, wherein the at least one control-resource set further comprises a second control-resource set; and the transceiver unit is further configured to:
send second indication information to the terminal device, wherein the second indication information indicates to switch the second control-resource set associated with the first search space to the first control-resource set.

42. The apparatus according to claim 40 or 41, wherein the first indication information comprises at least one of the following:
monitoring periodicity information, wherein the monitoring periodicity information indicates a periodicity of monitoring the first control information;
offset information, wherein the offset information indicates an offset of the target monitoring occasion in the periodicity; and
monitoring duration information, wherein the monitoring duration information indicates duration for monitoring the first control information in the periodicity.

43. The apparatus according to claim 42, wherein
the monitoring periodicity information comprises at least one of the following:
a quantity of radio frames comprised in the periodicity, a quantity of radio subframes comprised in the periodicity, a quantity of slots comprised in the periodicity, a quantity of symbols comprised in the periodicity, and a quantity of monitoring occasions comprised in the periodicity;
the offset information comprises at least one of the following:
a quantity of radio frames comprised in the offset, a quantity of radio subframes comprised in the offset, a quantity of slots comprised in the offset, a quantity of symbols comprised in the offset, and a quantity of monitoring occasions comprised in the offset; and
the monitoring duration information comprises at least one of the following:
a quantity of radio frames comprised in the duration, a quantity of radio subframes comprised in the duration, a quantity of slots comprised in the duration, a quantity of symbols comprised in the duration, and a quantity of monitoring occasions comprised in the duration, wherein the monitoring occasion comprised in the duration is the target monitoring occasion.

44. The apparatus according to claim 42 or 43, wherein the transceiver unit is further configured to:
send third indication information to the terminal device, wherein the third indication information indicates a start moment of the periodicity.

45. The apparatus according to claim 44, wherein the third indication information comprises at least one of the following: an identifier of the radio frame, an identifier of the radio subframe, an identifier of the slot, and an identifier of the symbol.

46. The apparatus according to claim 44 or 45, wherein a start monitoring occasion comprised in the periodicity is the 1^{st} monitoring occasion that is located after the start moment in the plurality of monitoring occasions; or
the start monitoring occasion is a monitoring occasion that is closest to the start moment in the plurality of monitoring occasions.

47. The apparatus according to any one of claims 40 to 46, wherein the transceiver unit is further configured to:
send fourth indication information to the terminal device, wherein the fourth indication information comprises at least one of the following: an identifier of a first transmission configuration indicator TCI state, an identifier of a cell corresponding to the first search space, and an identifier of a BWP corresponding to the first search space, wherein the identifier of the first TCI state is used by the terminal device to determine a beam for monitoring the first control information.

48. The apparatus according to claim 39, wherein the transceiver unit is further configured to:
send first configuration information to the terminal device, wherein the first configuration information is used to configure at least two search spaces of the multicast service and at least one control-resource set of the multicast service, and the at least one control-resource set comprises a first control-resource set, wherein
the at least two search spaces are associated with the first control-resource set, and the at least two search spaces and the first control-resource set correspond to the plurality of monitoring occasions.

49. The apparatus according to claim 48, wherein the first indication information comprises an identifier of a first search space in the at least two search spaces; and
the first search space and the first control-resource set correspond to the target monitoring occasion.

50. The apparatus according to claim 48, wherein the first indication information comprises an identifier of at least one TCI state; and
the at least one TCI state comprises a first TCI state, the first TCI state corresponds to a first search space, and the first search space and the first control-resource set correspond to the target monitoring occasion.

51. A communication apparatus, comprising a processor, wherein the processor is coupled to a memory, the memory stores a computer program, and the processor is configured to invoke the computer program in the memory, to enable the communication apparatus to perform the method according to any one of claims 1 to 13.

52. A communication apparatus, comprising a processor, wherein the processor is coupled to a memory, the memory stores a computer program, and the processor is configured to invoke the computer program in the memory, to enable the communication apparatus to perform the method according to any one of claims 14 to 25.

53. A computer-readable storage medium, wherein the storage medium stores a computer program or instructions; and when the computer program or the instructions are executed by a communication apparatus, the method according to any one of claims 1 to 13 is implemented.

54. A computer-readable storage medium, wherein the storage medium stores a computer program or instructions; and when the computer program or the instructions are executed by a communication apparatus, the method according to any one of claims 14 to 25 is implemented.
